(19) Europäisches Patentamt
European Patent Office
Office européen des brevets

(11) **EP 3 725 166 A1**

(12) **EUROPEAN PATENT APPLICATION**
published in accordance with Art. 153(4) EPC

(43) Date of publication:
**21.10.2020 Bulletin 2020/43**

(21) Application number: **18889569.2**

(22) Date of filing: **21.09.2018**

(51) Int Cl.:
***A23L 17/00*** (2016.01)   ***A23B 4/00*** (2006.01)

(86) International application number:
**PCT/JP2018/035201**

(87) International publication number:
**WO 2019/116668 (20.06.2019 Gazette 2019/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.12.2017 JP 2017241125**
**05.03.2018 JP 2018038904**

(71) Applicants:
• **NIPPON SUISAN KAISHA, LTD.**
**Minato-ku**
**Tokyo 105-8676 (JP)**
• **Seinan Suisan Co., Ltd.**
**Agoshima 894-1531 (JP)**

• **Kaneko Sangyo Co., Ltd.**
**Aratsu-City, Saga 847-0192 (JP)**

(72) Inventors:
• **HARA Takashi**
**Saiki-shi, Oita 876-1204 (JP)**
• **IKAME Susumu**
**Saiki-City, Oita 879-2603 (JP)**
• **HATANAKA Akimasa**
**Hachioji-shi, Tokyo 192-0991 (JP)**
• **ISHIZUKA Risa**
**Hachioji-shi, Tokyo 192-0991 (JP)**
• **AOYAMA Tadashi**
**Karatsu-City, Saga 847-0192 (JP)**

(74) Representative: **Mewburn Ellis LLP**
**Aurora Building**
**Counterslip**
**Bristol BS1 6BX (GB)**

(54) **PACKAGED FRESH TUNA MEAT, METHOD FOR PRODUCING PACKAGED FRESH TUNA MEAT, METHOD FOR PREVENTING CUT OF FRESH TUNA FROM DISCOLORING, CUT OF FRESH TUNA, AND METHOD FOR PROVIDING CUT OF FRESH TUNA**

(57)   One aspect of this disclosure provides packaged fresh tuna meat comprising an oxygen-impermeable packaging member and a cut of fresh tuna packaged by the packaging member along with a gas having an oxygen concentration of 1% by volume or less.

EP 3 725 166 A1

**Description**

TECHNICAL FIELD

The present disclosure relates to a packaged raw tuna meat, a method for producing a packaged raw tuna meat, a method for preventing discoloration of a cut of raw tuna meat, a cut of raw tuna meat, and a method for providing a cut of raw tuna meat.

BACKGROUND ART

A consumer interest in palatability and safety has been increasing in recent years, leading to even more demand for freshness and tastiness of fish meat. Products widely known in the art to achieve preserving the freshness and tastiness of fish meat for a long time include packaged products in which fish meat is packaged. Methods known in the art to preserve the freshness of fish meat for a long time include a method of displacing the inside of a packaged product with a predetermined gas.

For example, Patent Document 1 discloses a gas composition for improving the keeping quality of seafood, the gas composition containing nitrogen gas and carbon dioxide gas mixed at a ratio of 7:3 to 4:6 (volume ratio), and from 10 to 300 ppm of allyl isothiocyanate gas relative to the total of nitrogen gas, carbon dioxide gas, and allyl isothiocyanate gas. Patent Document 1 describes that use of such a gas composition for improving the keeping quality can prevent generation of odor of packaged seafood for 10 to 14 days and can effectively prevent the occurrence of psychrotrophic bacteria, which are particularly problematic in the storage of seafood.

In addition, in particular, for fish with a large body size, such as tunas, the fish body may be processed into cuts of meat of a certain size, such as what are called blocks, after landing, and the processed products may be distributed instead of the fish body itself. Thus, such a processed product is also required to maintain freshness of the content.

For example, Patent Document 2 discloses a thawing method characterized by packaging or storing highly fresh frozen meat, the meat frozen before rigor mortis, by oxygen gas displacement, and thawing the frozen meat. In addition, Patent Document 2 discloses a method for packaging or storing muscle of frozen tuna by oxygen gas displacement to produce bright red oxymyoglobin and to prevent autoxidation of myoglobin, conversion to metmyoglobin, browning of meat color, and deterioration of meat quality. Patent Document 2 describes that, as a result of studying storage conditions to prevent conversion of myoglobin to metmyoglobin, these methods can improve and maintain a hue of muscle of tuna species or the like over a long period and promote muscle recovery, prevent dripping, or improve texture.

On the other hand, in terms of preserving marine resources, aquaculture (hereinafter simply referred to as aquaculture including fish husbandry) is actively carried out for fish, such as tunas. In aquaculture, fish are grown under a controlled environment and feeding conditions, and thus this has been allowing high quality processed fish meat having more fat (fatty meat) than wild fish to be provided. Unlike wild tunas, which cannot be obtained without going to a distant ocean, aquacultured tunas are raised in relatively inshore waters, thus may be processed into blocks or the like at a relatively early stage after landing, and shipped as a packaged product in a raw state without being frozen.

The blocks obtained by the processing may be tightly packaged with a plastic film and distributed. It is pointed out that an amount of drip flowing out increases during the course with time after packaging. Patent Document 3 proposes cooling at a temperature not more than 10°C after tightly packaging with a plastic film to solve this problem. Patent Document 3 describes that the technique disclosed in Patent Document 3 can reduce drip loss during storage and distribution and achieve improving the production yield of the edible portion of tuna.

CITATION LIST

PATENT LITERATURE

Patent Document 1: JP 08-070764 A
Patent Document 2: JP 2015-015946 A
Patent Document 3: JP 2006-014630 A

SUMMARY OF THE INVENTION

TECHNICAL PROBLEM

However, in raw tuna processed into blocks and then packaged, the fish meat may discolor with prolonged time of exposure to air. In addition, in recent years, after delivery in a processed state, such as blocks, in stores, such as supermarkets, the packaged product may be opened to further prepare products, such as sashimi (sliced raw fish), from the processed products. However, in a case where discoloration has already occurred when the packaged product is opened, this portion cannot be used as a product. Thus, the discolored portion needs to be cut off, and if discolored portions increase, the product utilization rate, that is, the production yield would be reduced.

The present disclosure provides a method for preventing discoloration of a cut of raw tuna meat, the method preventing discoloration of the cut of raw tuna meat during the period in the package and in some instances also after unpacking the package.

SOLUTION TO THE PROBLEM

The present disclosure provides the following.

(1) A packaged raw tuna meat including: an oxygen-impermeable packaging member; and a cut of raw tuna meat packaged with the packaging member together with a gas having an oxygen concentration of not greater than 1 vol.%.

(2) The packaged raw tuna meat according to (1), wherein the gas contains an inert gas.

(3) The packaged raw tuna meat according to (2), wherein the inert gas contains at least one gas selected from the group consisting of nitrogen gas, carbon dioxide gas, helium gas, and argon gas.

(4) The packaged raw tuna meat according to any of (1) to (3), further including a water-absorbing member, wherein a portion or a whole of the cut of raw tuna meat is in contact with the water-absorbing member.

(5) The packaged raw tuna meat according to any of (1) to (4), wherein oxygen permeability of the packaging member is not greater than 1000 $cm^3/m^2 \cdot 24$ hr•atm.

(6) The packaged raw tuna meat according to any of (1) to (5), wherein oxygen permeability of the packaging member is not greater than 50 $cm^3/m^2 \cdot 24$ hr•atm.

(7) A method for producing a packaged raw tuna meat, the method including: cutting a tuna after landing to obtain a cut of raw tuna meat; packaging the cut of raw tuna meat with an oxygen-impermeable packaging member, and carrying out gas displacement until an oxygen concentration in a gas inside the package becomes not more than 1 vol.%; and sealing the packaging member after the gas displacement.

(8) The method for producing a packaged raw tuna meat according to (7), wherein the gas displacement is carried out using an inert gas.

(9) The method for producing a packaged raw tuna meat according to (8), wherein the inert gas contains at least one gas selected from the group consisting of nitrogen gas, carbon dioxide gas, helium gas, and argon gas.

(10) The method for producing a packaged raw tuna meat according to any of (7) to (9), the method further including storing the cut of raw tuna meat under refrigeration until packaging the cut of raw tuna meat with the packaging member.

(11) A method for preventing discoloration of a cut of raw tuna meat, the method including: cutting a tuna after landing to obtain a cut of raw tuna meat; packaging the cut of raw tuna meat with an oxygen-impermeable packaging member, and carrying out gas displacement until an oxygen concentration in a gas inside the package becomes not greater than 1 vol.%; and sealing the packaging member after the gas displacement to obtain a packaged raw tuna meat.

(12) The method for preventing discoloration of a cut of raw tuna meat according to (11), the method further including storing the packaged raw tuna meat under refrigeration.

(13) The method for preventing discoloration of a cut of raw tuna meat according to (12), wherein duration of the refrigerated storage is at least one week.

(14) The method for preventing discoloration of a cut of raw tuna meat according to (12), wherein duration of the refrigerated storage is at least four weeks.

(15) A packaged raw tuna meat including: an oxygen-impermeable packaging member; and a cut of raw tuna meat tightly packaged with the packaging member, wherein an amount of gas inside the package is not greater than 21 mL per kg of the cut of raw tuna meat.

(16) The packaged raw tuna meat according to (15), wherein oxygen permeability of the packaging member is not greater than 1000 $cm^3/m^2 \cdot 24$ hr•atm.

(17) The packaged raw tuna meat according to (15) or (16), wherein oxygen permeability of the packaging member is not greater than 200 $cm^3/m^2 \cdot 24$ hr•atm.

(18) The packaged raw tuna meat according to any of (15) to (17), wherein a tensile strength of the packaging member is from 80 MPa to 250 MPa.

(19) The packaged raw tuna meat according to any of (15) to (18), wherein a tensile elastic modulus of the packaging member is from 500 MPa to 900 MPa.

(20) A method for producing a packaged raw tuna meat, the method including: cutting a tuna after landing to obtain a cut of raw tuna meat; and tightly packaging the cut of raw tuna meat with an oxygen-impermeable packaging member and making an amount of gas inside the package not greater than 21 mL per kg of the cut of raw tuna meat.

(21) The method for producing a packaged raw tuna meat according to (20), the method further including storing the cut of raw tuna meat under refrigeration until packaging the cut of raw tuna meat with the packaging member.

(22) A method for preventing discoloration of a cut of raw tuna meat, the method including: cutting a tuna after landing to obtain a cut of raw tuna meat; and tightly packaging the cut of raw tuna meat with an oxygen-impermeable packaging member and making an amount of gas inside the package not more than 21 mL per kg of the cut of raw tuna meat to obtain a packaged raw tuna meat.

(23) The method for preventing discoloration of a cut of raw tuna meat according to (22), the method further including storing the packaged raw tuna meat under refrigeration.

(24) The method for preventing discoloration of a cut of raw tuna meat according to (23), wherein duration of the refrigerated storage is at least four days.

(25) A cut of raw tuna meat to be removed from a packaged raw tuna meat after a lapse of not less than four days from packaging, wherein an a* value measured with a chroma meter is not less than 14.05 and not more than 19 after a lapse of 0.5 hours from opening the packaged raw tuna meat.

(26) A cut of raw tuna meat to be removed from a packaged raw tuna meat, wherein an a*/b* value measured with a chroma meter is not less than 99% relative to an a*/b* value after a lapse of 0.5 hours from opening the packaged raw tuna meat.

(27) A cut of raw tuna meat to be removed from a packaged raw tuna meat after a lapse of not less than four days from packaging, wherein an a*/b* value measured with a chroma meter is not less than 1.29 after a lapse of 0.5 hours from opening the packaged raw tuna meat.

(28) A method for providing a cut of raw tuna meat, the method including a step of opening a packaged raw tuna meat, wherein an a* value of the cut of raw tuna meat measured with a chroma meter is not less than 17.05 after a lapse of 8 hours from after opening the packaged raw tuna meat.

ADVANTAGEOUS EFFECTS OF THE INVENTION

The present disclosure can provide a packaged raw tuna meat prevented from discoloring during the period in the package and in some instances also after unpacking the package, and a method for preventing discoloration of a cut of raw tuna meat.

BRIEF DESCRIPTION OF THE DRAWINGS

FIG. 1 is a graph showing changes in a* values of tuna meat after a lapse of 7 days from packaging according to an example of the present disclosure.

FIG. 2 is a graph showing changes in a*/b* values of tuna meat after a lapse of 7 days from packaging according to an example of the present disclosure.

DESCRIPTION OF EMBODIMENTS

Hereinafter, suitable embodiments of the present disclosure will be described. However, the present disclosure is not limited to the following embodiments.

In the present specification, a hue change over time according to a certain pattern of a cut of raw tuna meat described below is referred to simply as "discoloration" or "discoloring" unless otherwise noted. In addition, a slowing down of the speed of "discoloration" or "discoloring" may be referred to simply as preserving the hue, delaying discoloration, prevented from discoloring (preventing discoloration), or the like. As described below, this "discoloration" means a color change irreversibly shifting in a certain manner from low saturation red (e.g., dark red) at the time of cutting to brilliant red (e.g., scarlet) and further to low lightness and low saturation red (e.g., dark brown) under normal temperature and normal pressure and air (oxygen concentration: 21.0 vol.%). "Discoloration" does not include a temporary color change in a cut of raw tuna meat, such as, for example, a color change when the cut of raw tuna meat is exposed to nitrogen gas. In the present specification, scarlet may be referred to as "bright red", "light pink", or the like based on its intensity of red.

In a first embodiment of the present specification, in referring to a concentration or amount of gas, the concentration or amount of gas is a concentration or amount based on a volume of gas at normal temperature (one atm) and at a temperature of 0°C to 10°C. In a second embodiment of the present specification, in referring to a concentration or amount of gas, the concentration or amount of gas is a concentration or amount based on a volume of gas at normal temperature (one atm) and at a temperature of 18°C to 20°C.

In the present specification, the term "step" includes not only an independent step but also a step that cannot be clearly distinguished from other steps provided that an intended object of the step is achieved. In the present specification, numerical ranges indicated by "to" are ranges including the numerical values described before and after the "to" as the minimum and maximum values, respectively. In the present specification, when a plurality of substances corresponding to each component in a composition is present, the amount of each component in the composition means a total amount of the plurality of substances present in the composition, unless otherwise noted. In the present specification, the term "not more than" or "less than" with respect to a percentage includes 0%, unless the lower limit value is specifically stated, that is, "not containing", or means a range including a value undetectable by present means.

In the present disclosure, when a numerical range specifying only one or a plurality of upper limit values and a numerical range specifying only one or a plurality of lower limit values are described for an identical target, unless otherwise noted, an embodiment of the present invention includes a numerical range having a combination of any upper limit value selected from the one or the plurality of the upper limit values and any lower limit value selected from the one or the plurality of the lower limit values.

Hereinafter, the present disclosure will be described.

FIRST EMBODIMENT

A first embodiment of a packaged raw tuna meat according to the present disclosure is a packaged raw tuna meat including an oxygen-impermeable packaging member and a cut of raw tuna meat packaged with the packaging member together with a gas having an oxygen concentration of not greater than 1 vol.%.

A first embodiment of a method for producing a packaged raw tuna meat according to the present disclosure is a method for producing a packaged raw tuna meat, the method including: cutting a tuna after landing to obtain a cut of raw tuna meat; packaging the cut of raw tuna meat with an oxygen-impermeable packaging member, and carrying out gas displacement until an oxygen concentration in a gas inside the package becomes not greater than 1 vol.%; and sealing the packaging member after the gas displacement.

A first embodiment of a method for preventing discoloration of a cut of raw tuna meat according to the present disclosure is a method for preventing discoloration of a cut of raw tuna meat, the method including: cutting a tuna after landing to obtain a cut of raw tuna meat; packaging the cut of raw tuna meat with an oxygen-impermeable packaging member, and carrying out gas displacement until an oxygen concentration in a gas inside the package becomes not greater than 1 vol.%; and sealing the packaging member after the gas displacement to obtain the packaged raw tuna meat.

The present disclosure can provide a packaged raw tuna meat in which a cut of raw tuna meat after cutting is packaged with the packaging member together with a gas having an oxygen concentration of not greater than 1 vol.% and thus prevented from discoloring during the period in the package and in some instances also after unpacking the package.

First, a change in the hue of fish meat will be described. The hue of fish meat typically depends on the state of myoglobin. Raw meat of a fresh tuna immediately after landing exhibits a dark red color due to reduced myoglobin. Cutting the fresh tuna after landing results in bonding reduced myoglobin present near the cut surface with oxygen in the air. This causes the reduced myoglobin to change to oxymyoglobin, and the color of the cut of raw tuna meat changes from dark red to scarlet accordingly. It is believed that further oxidation would convert oxymyoglobin to metglobin, resulting in exhibiting a dark brown color.

In addition, fish meat is believed to exhibit a given hue depending on not only the change of myoglobin but also other various factors, such as, for example, those due to oxidation of lipid and those derived from a metabolite.

The hue of a cut of raw tuna meat is known to differ also depending on, for example, a body part of the tuna and an individual tuna. However, hues of cuts of raw tuna meat after cutting are common in that cuts of raw tuna meat typically tend to exhibit low lightness red (e.g., dark red) at the time of cutting, then brilliant red (e.g., scarlet), and further, as time passes, low lightness and low saturation red (e.g., dark brown).

As described above, the hue of the cut of raw tuna meat is known to change over time according to a certain pattern, but the cause for that has not been clearly elucidated.

According to one aspect of the present disclosure, the cut of raw tuna meat obtained by cutting after landing is packaged together with a gas having a predetermined oxygen concentration, and thus this can delay the progress of the change in the hue of the cut of raw tuna meat over time described above, though the detailed mechanism is not known. That is, one aspect of the present disclosure can provide a packaged raw tuna meat having what is called good colorfastness. This tendency to delay the hue change can be observed in the state of the packaged product and also after unpacking the package.

Furthermore, in the first embodiment of the packaged raw tuna meat according to the present disclosure, the cut of raw tuna meat is packaged with a gas having a predetermined oxygen concentration, and thus this can delay the hue change of the cut of raw tuna meat during the period in the package over a longer period than in packaged raw tuna meat known in the art. In some instances, this is also the case for the cut of raw tuna meat after unpacking the package, although details are uncertain. In addition, the first embodiment of the packaged raw tuna meat according to the present disclosure can maintain a good hue state longer than related products known in the art.

Moreover, in the first embodiment of the method for preventing discoloration of a cut of raw tuna meat according to the present disclosure, the method includes packaging a cut of raw tuna meat together with a gas having a predetermined oxygen concentration, and thus this can delay the hue change of the cut of raw tuna meat as a packaged product over a longer period and in some instances can maintain a good hue state for longer period also after unpacking the package compared with related products known in the art.

Still more, in particular, in packaged raw tuna meat known in the art, not only the surface but also the inside of the cut of raw tuna meat can discolor. In contrast, in an embodiment of the packaged raw tuna meat according to the present disclosure, if the cut of raw tuna meat discolors, the discoloration can be limited to a shallower portion of the surface (surface layer) compared with related products known in the art. This reduces a discolored portion to be cut off in preparing a final product from the cut of raw tuna meat and can increase the production yield of the final product over that of related products known in the art.

Packaged raw tuna meat

An embodiment of a packaged raw tuna meat according to the present disclosure includes an oxygen-impermeable packaging member and a cut of raw tuna meat packaged with the packaging member together with a gas having an oxygen concentration of not greater than 1 vol.%.

Examples of the tuna applied to the above packaged raw tuna meat include those belonging to the genus Thunnus. Among the genus Thunnus, a relatively large tuna species is suitably used, such as, for example, Pacific bluefin tuna, southern bluefin tuna, and Atlantic bluefin tuna. The tuna species described above are relatively large, thus are often distributed as processed products and preferably applicable to the packaged raw tuna meat of the present disclosure. The tuna species described above are known to typically contain a relatively large amount of a functional unsaturated fatty acid, such as docosahexaenoic acid (DHA). The packaged raw tuna meat may contain a cut of additional fish meat in addition to the cut of raw tuna meat. Examples of such an additional fish may include a marlin.

The tuna applied to the packaged raw tuna meat may be an aquacultured tuna or a wild tuna. An aquacultured tuna contains more fat (what is called with plenty of fat on it) compared with a wild tuna and thus tends to be susceptible to discoloration compared with a wild tuna but can be applied to the packaged raw tuna meat of the present disclosure. In the cut of raw tuna meat containing aquacultured tuna, the discoloration prevention effect of the present disclosure is more significant.

In the present specification, an "aquacultured tuna" means a tuna raised with a blended feed, a moist pellet, or a live feed over a predetermined rearing period. In the present specification, "aquaculture" includes artificial seed and fry, or catching young fish with a size of approximately several hundred grams to 5 kg and aged from 0 to 1 years and rearing for 3 to 5 years, and additionally "fish husbandry", in which young fish with a size of 5 kg to 300 kg are caught and raised for a short period, for example, from a half year to one year.

In the present specification, the "cut of raw tuna meat" means fish meat obtained by cutting a tuna fish body (tuna meat after cutting). In the present specification, "raw" means having no history of being heated from outside or no history of being frozen, or being not stored frozen. The tuna applied to the packaged raw tuna meat is to be a tuna that is not heated, not frozen, or not stored frozen after landing.

The cutting refers to, by customary, sequentially cutting a tuna fish body at the time of landing in the following order: in the form of gilled and gutted (GG), in which the gills and guts are removed from the tuna fish body; "dress (also referred to as headless)", in which the head and tail are cut off from the GG; "fillet", in which the dress is cut into three slices and the backbone is removed; and "loin (quartered)", in which the fillet is cut into dorsal meat and ventral meat. In addition to the dress, fillet, and loin described above, the "cut of tuna meat" in the present specification also includes a "block (also referred to as a 'koro' (chunk))", which is obtained by further cutting the loin in the direction perpendicular to the longitudinal direction of the body, for example, into two to four pieces.

The above "cut of tuna meat" can include, for example, intermediate fish meat, in which at least a portion of the fish body is removed, and in some instances fish meat in the final form for eating, rather than the tuna fish body itself at the time of landing. However, the cut of tuna meat does not include the form in which the gills and guts are removed, what is called "GG". The "cut of tuna meat" may include, for example, a portion of an individual fish, which may be a processed form in cutting by customary (e.g., such as the dress, fillet, and loin described above), or those processed into a shape different from the above. The shape of the cut of tuna meat in a shape different from the processed form by customary is not particularly limited and may be a shape derived by further removing a portion of the processed form, such as the dress, fillet, or loin; or any shape cut out from an individual fish without depending on the processed form, such as the dress, fillet, or loin.

The cut of raw tuna meat may be more specifically, for example, a cut of tuna meat in a form referred to as a block. The cut of raw tuna meat formed in a block can be processed into a highly handleable packaged raw tuna meat.

The cut of raw tuna meat can be processed using a tuna meat of any portion obtained from the tuna fish body. The cut of raw tuna meat may be, for example, a tuna meat obtained from the red meat portion of the dorsal meat, the medium fatty meat portion of the dorsal meat, the red meat portion of the ventral side, the medium fatty meat portion of the ventral side, and the fattiest meat portion of the ventral side.

The portion where discoloration is prevented in the cut of raw tuna meat can be used as is for the final product, such as sashimi, thus a landed tuna fish body is temporarily processed into the packaged raw tuna meat of the present disclosure, and this can prevent discoloration, eliminate time and work, such as cutting off a discolored portion, as much as possible, and increase the production yield of the final product.

A size of the cut of raw tuna meat is not particularly limited. The size of the cut of raw tuna meat can be appropriately set according to the purpose of use. Examples of a cut of raw tuna meat in the form of loin include those with a length from 65 cm to 90 cm and a width from 25 cm to 35 cm, and examples of a cut of raw tuna meat in the form of block include those measuring 25 cm per side. A thickness of the cut of raw tuna meat may be, for example, not less than 1 cm, not less than 3 cm, not less than 5 cm, not less than 10 cm, or not less than 20 cm. A size of the cut of raw tuna meat may be, for example, as small as 5 cm x 7 cm x 1 cm per side, and a weight can be approximately 200 g or even approximately 1 kg. The shape of the cut of raw tuna meat may be any shape that can be packaged with the packaging member.

The cut of raw tuna meat substantially preserves a raw hue immediately after cutting. Immediately after cutting refers to, for example, within 30 minutes, within 10 minutes, or within 5 minutes from the completion of the cutting. The cutting leaves the surface of the cut of raw tuna meat exposed to the surrounding environment, and thus this can greatly change the hue if the surface is exposed to the surrounding environment, such as air, for a long time. Thus, the cut of raw tuna meat is preferably packaged immediately after cutting. However, the cut of raw tuna meat can preserve the raw hue as described above for a longer period, for example, by packaging to block from the surrounding environment after cutting and by storing under refrigeration after cutting. In this case, the cut of raw tuna meat within 24 hours or 12 hours after cutting can also maintain the raw hue and thus can be used in producing the packaged raw tuna meat. Within this range, much of reduced myoglobin is retained in the fish meat and can exhibit a dark red color. The dark red is a hue distinguishable from the scarlet of oxymyoglobin or the dark brown of metmyoglobin.

An embodiment of the packaged raw tuna meat of the present disclosure allows the packaged cut of raw tuna meat to substantially maintain the hue of the tuna meat immediately after cutting (raw hue) over a long period. Whether a product is the packaged raw tuna meat of the present disclosure can be identified, for example, by measurement using a color difference meter. One example of the identification method includes, but is not limited to, the following method.

First, a packaged raw tuna meat packaged together with air is prepared as a reference standard. For both a packaged raw tuna meat to be measured and the reference standard, packaged products are opened to measure a hue change of the surface of the cut of raw tuna meat that has been packaged with the packaging member using an appropriate color difference meter or the like. A result of the packaged raw tuna meat measured is compared with a result of the reference standard to determine whether the progress of discoloration according to the hue change pattern is fast or slow. When the progress of discoloration according to the hue change pattern is slow, the packaged raw tuna meat measured can be determined to be a packaged raw tuna meat according to the present disclosure.

Leaking of moisture from the cut of raw tuna meat is typically referred to as a drip. In the packaged raw tuna meat according to the present disclosure, exposure of moisture from the cut of raw tuna meat tends to be prevented, and an amount of drip is reduced.

The packaged raw tuna meat may further include a water-absorbing member. That is, the cut of raw tuna meat may be further packaged together with the water-absorbing member. In the packaged raw tuna meat, a portion or all of the cut of raw tuna meat may be in contact with the water-absorbing member, for example, only one surface of the cut of raw tuna meat may be in contact with the water-absorbing member, and a whole of the cut of raw tuna meat may be in contact with the water-absorbing member (the cut of raw tuna meat may be wrapped with the water-absorbing member). The water-absorbing member is in contact with the cut of raw tuna meat, and this can further prevent the drip from the cut of raw tuna meat. In addition, the water-absorbing member is in contact with the cut of raw tuna meat, and this can more reliably prevent coloration of the surface and the surface layer (e.g., the layer of several millimeters from the surface) due to blood or the like and can prevent reduction of the production yield in preparing the final product from the cut of raw tuna meat.

Any water-absorbing member used in this application is not particularly limited, and examples of the water-absorbing member may include materials commonly used in water-absorbing applications. Examples of a shape of the water-absorbing member may include a sheet shape and a tray shape. Specifically, examples of the water-absorbing member may include a water-absorbing sheet (trade designation: "Shinsen Plate", available from Kinsei Seishi Co., Ltd.).

The packaging member used in the packaged raw tuna meat is an oxygen-impermeable packaging member. Examples of the oxygen-impermeable packaging member that can be used include a packaging member having oxygen permeability of not more than a predetermined value. The oxygen permeability of such a packaging member may be, for example, not greater than 1000 cm$^3$/m$^2$•24hr•atm and may be not greater than 500 cm$^3$/m$^2$•24hr•atm, not greater than 400 cm$^3$/m$^2$•24hr•atm, not greater than 320 cm$^3$/m$^2$•24hr•atm, not greater than 300 cm$^3$/m$^2$•24hr•atm, not greater than 200 cm$^3$/m$^2$•24hr•atm, not greater than 100 cm$^3$/m$^2$•24hr•atm, not greater than 50 cm$^3$/m$^2$•24hr•atm, not greater than 30 cm$^3$/m$^2$•24hr•atm, not greater than 25 cm$^3$/m$^2$•24hr•atm, not greater than 20 cm$^3$/m$^2$•24hr•atm, and not greater than 10cm$^3$/m$^2$•24hr•atm. One of the packaging members having the oxygen permeability as described above can be used alone, or two or more of them can be used in combination. A packaging member having lower oxygen permeability is preferably used in terms of controlling the oxygen concentration in the gas inside the package, and in using one packaging member alone, a packaging member having lower oxygen permeability may be advantageously selected. The oxygen impermeability is a value measured in accordance with the conditions of JIS K 7126 (23°C, 65% RH).

Examples of the packaging member include films on which silicon oxide, aluminum oxide, aluminum, or the like is vapor-deposited; aluminum foil; and members containing a resin film, such as of polyamide (nylon), polyethylene naphthalate, polyvinylidene chloride, ethylene vinyl copolymer, and polyvinyl alcohol.

A shape of the packaging member is not particularly limited and can be appropriately selected according to the shape of the cut of raw tuna meat. The shape of the packaging member may be, for example, a shape commonly used in this application, such as a bag shape and a box shape. Examples of the packaging member may more specifically include those commonly used in this application, such as bag-shaped packaging members made of a soft material and box-shaped packaging members made of a hard material.

The packaging member may have a tightly closable mechanism to retain the gas inside the packaged product. The tightly closable mechanism in the packaging member may be integrated with the packaging member or may be separable. Examples of the packaging member having the tightly closable mechanism may include a packaging member constituted of a box-shaped body and a tightly closable lid part, and a packaging member having a fastener mechanism capable of fastening, an adhesive member, and the like in a portion of the packaging member. The packaging member need not include the tightly closable mechanism in advance. In this case, the packaging member is to be tightly closed separately by a physically tightly closable mechanism. Examples of such a tightly closable mechanism may include thermocompression bonding (heat sealing), rubber fasteners, adhesives, adhesive sheets, and clips.

Specific examples of the packaging member may include a bag made of a composite film of nylon and polyethylene and a box made of polypropylene.

In the packaged raw tuna meat, the oxygen concentration in the internal gas packaged together with the cut of raw tuna meat is not greater than 1 vol.%. The gas inside the package may be a gas containing oxygen not more than the detection limit or a gas completely free of oxygen. The oxygen concentration in the gas inside the packaged raw tuna meat is within the above range, and this can prevent discoloration in the cut of raw tuna meat after cutting and also can prevent the progress of discoloration of the cut of raw tuna meat after unpacking the package.

The oxygen concentration in the gas inside the packaged raw tuna meat may be, for example, not greater than 0.8 vol.%, not greater than 0.5 vol.%, not greater than 0.4 vol.%, not greater than 0.3 vol.%, not greater than 0.2 vol.%, and not greater than 0.1 vol.% in terms of further preventing discoloration. A predetermined gas having an oxygen concentration of 1 vol.% or less can be obtained by a well-known method in the art, and this will be described below.

The oxygen concentration in the gas inside the package can be determined by a method commonly applied to this application. The oxygen concentration in the gas inside the package can be determined, for example, by collecting a predetermined amount (e.g., 10 mL) of the gas inside the package of the packaged raw tuna meat using a syringe or the like and measuring using an oxygen analyzer.

In the packaged raw tuna meat, an amount of gas inside the package is not particularly limited as long as the oxygen concentration in the gas packaged together with the cut of raw tuna meat is not more than 1 vol.%, and, for example, the amount of gas per kg of the cut of raw tuna meat can be not more than 10 L (liter). In addition, the amount of gas inside the package may be adjusted according to the type of gas. The amount of gas inside the package is within the above range, and this can provide a more preferred hue in the cut of raw tuna meat in the packaged state and also can prevent discoloration over longer period, allowing the packaged raw tuna meat to preserve the hue.

The gas packaged together with the cut of raw tuna meat may contain an inert gas. The gas contains an inert gas, and this can further prevent the progress of discoloration of the cut of raw tuna meat during the period in the package and also after unpacking the package. Examples of the inert gas may include an inert gas capable of retaining an oxygen concentration inside the package of not greater than 1 vol.%. Examples of such an inert gas may include at least one gas selected from the group consisting of nitrogen gas, carbon dioxide gas, helium gas, and argon gas.

In particular, the gas preferably contains nitrogen gas as the inert gas. The gas contains nitrogen gas as the inert gas, and this can prevent discoloration of the cut of raw tuna meat as the packaged product and also after unpacking the package over a longer period compared with related products known in the art. In addition, in a case where discoloration occurs in the cut of raw tuna meat after unpacking the package, the area where discoloration occurs can be limited to a thinner surface layer portion compared with related products known in the art. In this regard, in the package containing nitrogen gas, the hue of the surface layer of the cut of raw tuna meat in contact with nitrogen gas may temporarily change, but this change in the hue is reversible. Unpacking the package and exposing the cut of raw tuna meat to air allows the hue of the surface layer of the cut of raw tuna meat to return to the hue close to the hue at the time of cutting, that is, a dark red or a bright red.

The packaged raw tuna meat may contain, for example, any additional member and any food ingredient that do not impair the effects of the present disclosure. Examples of such an additional member may include water-resistant paper and non-water-absorbing trays. Examples of such a food ingredient include meat.

The packaged raw tuna meat according to the present disclosure can also be a packaged raw tuna meat in which the cut of raw tuna meat is packaged with an oxygen-impermeable packaging member together with a gas having an amount of oxygen of not more than 21 mL per kg of the cut of raw tuna meat.

In the present specification, the packaged raw tuna meat described above in which the cut of raw tuna meat is packaged together with the gas having an oxygen concentration of not more than 1 vol.% may be referred to as a "first packaged raw tuna meat", the packaged raw tuna meat in which the cut of raw tuna meat is packaged together with the gas having an amount of oxygen of not more than 21 mL per kg of the cut of raw tuna meat may be referred to as a "second packaged raw tuna meat", and they may be referred to simply as a "packaged raw tuna meat" when they are referred to without distinction.

In the second packaged raw tuna meat, the cut of raw tuna meat is packaged together with a gas having an amount of oxygen of not more than 21 mL per kg of the cut of raw tuna meat, and thus this can prevent discoloration of the surface layer or inside of the cut of raw tuna meat over the period in the package and also after unpacking the package and maintain the hue over a long period similarly as in the first packaged raw tuna meat.

In the second packaged raw tuna meat, the cut of raw tuna meat is packaged together with a gas having an amount of oxygen of not more than 21 mL per kg of the cut of raw tuna meat. The cut of raw tuna meat is packaged together with a gas having an amount of oxygen within the above range, and thus this can well prevent discoloration of the cut of raw tuna meat and maintain the hue over a long period.

The amount of oxygen in the gas of the package can be, for example, not greater than 15 mL, not greater than 10 mL, not greater than 8 mL, not greater than 6 mL, not greater than 4 mL, not greater than 3 mL, not greater than 2.5 mL, not greater than 2 mL, not greater than 1.5 mL, not greater than 1 mL, not greater than 0.5 mL, not greater than 0.3 mL, and not greater than 0.2 mL per kg of the cut of raw tuna meat. The amount of oxygen can be determined, for example, using an oxygen analyzer as described in relation to the first packaged cut of raw tuna meat.

As described above, the amount of gas inside the package is not particularly limited as long as the gas inside the packaged product satisfies the amount of oxygen of not more than 21 mL per kg of the cut of raw tuna meat, and the amount of gas inside the package can be, for example, 10 L (liter) per kg of the cut of raw tuna meat. In addition, the amount of gas inside the package can be adjusted according to the type of gas. The amount of air inside the package can be, for example, not more than 100 mL per kg of the cut of raw tuna meat inside the package. The gas inside the packaged product may contain an inert gas. For the inert gas applicable to the second packaged raw tuna meat, the contents described with respect to the first packaged raw tuna meat can be applied.

In the second packaged raw tuna meat, the cut of raw tuna meat may be packaged together with a gas having an oxygen concentration of not greater than 1 vol.% and an amount of oxygen of not more than 21 mL per kg of the cut of raw tuna meat. In this case, the oxygen concentration may be another concentration described in the first packaged raw tuna meat, the amount of oxygen per kg of the cut of raw tuna meat may be another amount of oxygen described above, and these concentration and amount may be in any combination in possible ranges.

For the cut of raw tuna meat and the oxygen-impermeable packaging in the second packaged raw tuna meat, the contents described in relation to the first packaged raw tuna meat can be applied. The contents described in relation to the first packaged raw tuna meat can also be applied to other matters related to the second packaged raw tuna meat.

Method for producing packaged raw tuna meat

The first embodiment of the method for producing a packaged raw tuna meat according to the present disclosure includes: cutting a tuna after landing to obtain a cut of raw tuna meat (hereinafter also referred to as the cutting step); packaging the cut of raw tuna meat with an oxygen-impermeable packaging member, and carrying out gas displacement until an oxygen concentration in a gas inside the package becomes not greater than 1 vol.% and/or an amount of oxygen in a gas inside the package becomes not greater than 21 mL per kg of the cut of raw tuna meat (hereinafter also referred to as the packaging step); and sealing the packaging member after the gas displacement (hereinafter also referred to as the sealing step). The method for producing a packaged raw tuna meat according to the present disclosure may include an additional step as necessary.

The present production method can efficiently provide the packaged raw tuna meat described above.

In the cutting step, a tuna after landing is cut using, for example, a cutting tool. At the time of landing, a tuna may be freshly killed. "Freshly killing" in the present specification means a procedure to paralyze a tuna species (live fish) into a brain-dead state and then further drain blood from the fish. At the time of landing, the tuna may be paralyzed by a method commonly employed. To the method for paralyzing, for example, carbon dioxide gas, cold water immersion, and an electrical shocker can be applied. Among these methods, a method using an electrical shocker can avoid excessive muscle movement at the time of landing and prevent the occurrence of what is called burnt tuna syndrome, and thus is preferred.

During the period from after landing to cutting, the tuna is preferably stored under refrigeration to preserve the state of the raw tuna. That is, the cutting step may further include storing the tuna after landing under refrigeration. The temperature of the refrigerated storage may be cool temperature, for example, not higher than 10°C, not higher than 4°C, not higher than 2°C, or not higher than 0°C, and higher than the freezing temperature.

The tuna provided to the cutting step may be either a wild tuna or an aquacultured tuna. The wild tuna and the aquacultured tuna may be in a natural form of fish body or may be in what is called a GG form of fish body. The aquacultured tuna is preferably an individual having increased body weight and body mass index during the rearing period. The body weight of the tuna provided to the cutting step is preferably not less than 40 kg, more preferably not less than 60 kg, and even more preferably not less than 80 kg.

The body mass index of the tuna provided to the cutting step is preferably not less than 20, more preferably not less than 22, and even more preferably not less than 24. Such a tuna is what is called a fish with fat (toro) on it, a fish containing abundant fat in the whole individual, has a high commercial value when used as a processed product, and is preferred as a food product. The "body mass index" in the present specification means a value calculated from the total body weight and the caudal furca length of the tuna according to the following formula:

$$\text{Body mass index} = \{\text{total weight (g)} / [\text{caudal furca length (cm)}]^3\} \times 1000$$

The cutting can be carried out at room temperature, for example, in an environment of 18 to 20°C. The cutting is preferably carried out at an early stage after landing in terms of freshness and preventing discoloration, for example, within 24 hours or within 12 hours from landing.

The cutting is to be carried out using a cutting tool that can cut an individual fish to a predetermined size. The cutting tool is not particularly limited, and examples of the cutting tool may include a kitchen knife, a cutter, a knife, and a cutting machine. The cutting tool is, for example, preferably a relatively short kitchen knife. The blade length of the kitchen knife is preferably not more than 50 cm, more preferably not less than 20 cm and less than 30 cm, and even more preferably not less than 20 cm and not more than 28 cm. Use of such a cutting tool can reliably cut a relatively soft fish body, for example, a fish body immediately after landing and further an aquacultured tuna immediately after landing.

The cutting is carried out preferably while the fish body is securely fixed. Examples of the method for fixing include, but not particularly limited to, a method of pressing a fish body by personnel and a method of pressing a fish body using a fixing tool. The method for fixing can be appropriately selected in consideration of the size of the fish body, efficiency, and the like.

The cutting step may further include trimming the cut of raw tuna meat obtained by the cutting. The trimming can adjust the shape of the cut of raw tuna meat, and this can achieve improving the efficiency in the subsequent processing. In the trimming, any tool that can adjust the shape of the cut of raw tuna meat can be used without limitation. Examples of such a tool that can be used for trimming include a cutting tool used at the time of cutting and scissors.

The cut of raw tuna meat obtained by cutting is preferably stored under refrigeration during the period until packaging with a packaging member in terms of freshness and preventing discoloration of the raw tuna meat. That is, the method for producing a packaged raw tuna meat according to the present disclosure may further include storing the cut of raw tuna meat under refrigeration. In storing the cut of raw tuna meat under refrigeration, the hue immediately after cutting can be preserved during the period until packaging, and thus the cut of raw tuna meat need not be packaged in succession to the cutting step.

The temperature of the refrigerated storage is preferably cool temperature, for example, not higher than 10°C, not higher than 4°C, not higher than 2°C, or not higher than 0°C, and preferably higher than the freezing temperature, for example, a temperature of 0°C +/- 2°C. The refrigerated storage at the temperature within the above range can more sufficiently preserve the raw hue of the cut of raw tuna meat without freezing the cut of raw tuna meat. In addition, if discoloration of the cut of raw tuna meat can be prevented, the cut of raw tuna meat may be stored at a temperature higher than the temperature exemplified as described above.

In the packaging step, the cut of raw tuna meat after cutting is packaged with an oxygen-impermeable packaging member, and the gas displacement is carried out until the oxygen concentration of the gas inside the package becomes 1 vol.%. The "gas displacement" in the present specification means changing the gas inside the package and includes introducing another type of gas into the package to replace the gas inside the package and removing a gas constituting the gas inside the package to a desired amount.

The method of packaging is not particularly limited and can be appropriately selected, for example, according to the shape of the packaging member and a packaging mechanism. The packaging can be carried out at room temperature, for example, in an environment of 18 to 20°C. In addition, the contents described in the above packaged raw tuna meat can be applied to the packaging member, and in order to more reliably preserve the type of gas, a composition ratio of the gases inside the packaged product, and the like, a plurality of types of packaging members may be used.

The packaging step is preferably carried out within 24 hours or 12 hours after cutting or may be carried out in succession to the cutting process in terms of preventing discoloration of the cut of raw tuna meat. When the cut of raw tuna meat is stored under refrigeration after cutting, the packaging step is to be carried out in succession to the end of the refrigerated storage. When the cut of raw tuna meat after cutting is stored under refrigeration, the packaging step, if carried out after cutting, need not be completed within approximately 24 hours from landing and may be completed, for example, within 5 days, within 4 days, within 3 days, or within 2 days from landing. When the packaging is not carried out in succession to the cutting process, the method may further include a processing step before carrying out the packaging, and the cut of raw tuna may be further processed into a desired shape appropriate as a packaged product.

The gas displacement may be carried out by any method that can make the oxygen concentration in the gas inside the package not more than a predetermined value. Examples of the method of gas displacement may include degassing, gas filling, and a combination of these procedures. Examples of the method of gas displacement may more specifically include a method of degassing the inside of the package to a desired amount of gas, a method of filling an inert gas into the inside of the packaging member, a method of degassing the inside of the package and then filling an inert gas into the inside of the package, and a method of carrying out these procedures multiple times in succession. The degassing may be carried out, for example, using a vacuum packaging machine or may be carried out by applying pressure from the outside.

The method of gas displacement is preferably carried out by repeating a set of filling with an inert gas and degassing multiple times, and gas displacement carried out by such a method can more reliably make the oxygen concentration in the gas inside the package not more than a predetermined value. Furthermore, in addition to the above methods of gas displacement, for example, a method using an oxygen scavenger or the like may be used.

Examples of the inert gas used in the gas displacement may include at least one gas selected from the group consisting of nitrogen gas, carbon dioxide gas, helium gas, and argon gas, as described for the above packaged raw tuna meat. The inert gas preferably contains nitrogen gas and more preferably consists of nitrogen gas.

In the sealing step, the packaging member is sealed after the gas displacement. That is, the sealing step is a step of sealing a gas having an oxygen concentration of not more than 1 vol.% and the cut of raw tuna meat after cutting with the packaging member. The method of sealing can be appropriately selected according to the type of packaging member. In terms of retaining the gas inside the package, the method of sealing is preferably, for example, a heat sealing. Through the sealing step, the above packaged raw tuna meat can be obtained, the packaged raw tuna meat in which the cut of raw tuna meat is packaged together with a predetermined gas.

The method for producing a packaged raw tuna meat may further include storing the packaged raw tuna meat under refrigeration, the packaged raw tuna meat obtained after the sealing step. The method further including storing under refrigeration can prevent discoloration of the cut of raw tuna meat over a longer period.

Method for preventing discoloration of cut of raw tuna meat

The first embodiment of the method for preventing discoloration of a cut of raw tuna meat according to the present disclosure includes: cutting a tuna after landing to obtain a cut of raw tuna meat (hereinafter also referred to as the cutting step); packaging the cut of raw tuna meat with an oxygen-impermeable packaging member, and carrying out gas displacement until an oxygen concentration in a gas inside the package becomes not more than 1 vol.% and/or an amount of oxygen in a gas inside the package becomes not more than 21 mL per kg of the cut of raw tuna meat (hereinafter also referred to as the packaging step); and sealing the packaging member after the gas displacement to obtain the packaged raw tuna meat described above (hereinafter also referred to as the sealing step). The method for preventing discoloration of a cut of raw tuna meat may further include storing the resulting cut of raw tuna meat under refrigeration (hereinafter also referred to as the refrigerated storage step). The method for preventing discoloration of a cut of raw tuna meat may include an additional step as necessary.

That is, the method for preventing discoloration of a cut of raw tuna meat according to the present disclosure includes the steps of cutting, packaging, and sealing in the same manner as the method for producing a packaged raw tuna meat described above. Thus, the method can delay the change in the hue of the cut of raw tuna meat in the packaged raw tuna meat to preserve the hue, prevent discoloration of the cut of raw tuna meat to preserve the hue during the period in the package and in some instances also after unpacking the package, and maintain a good hue over a longer period than in related products known in the art. The method for preventing discoloration of a cut of raw tuna meat may further include storing the resulting packaged raw tuna meat under refrigeration, and the refrigerated storage of the packaged raw tuna meat can further delay the change in the hue of the cut of raw tuna meat in the packaged raw tuna meat to more sufficiently preserve the hue, further prevent discoloration of the cut of raw tuna meat to more sufficiently preserve the hue during the period in the package and in some instances also after unpacking the package, and maintain a good hue over a longer period compared with related products known in the art.

The method for preventing discoloration of a cut of raw tuna meat according to the present disclosure can delay progress of discoloration of the cut of raw tuna meat to preserve the hue and thus can prevent a discolored portion from occurring in the cut of raw tuna meat. In addition, in a case where a portion where the hue changes occurs in the cut of raw tuna meat, the method can reduce a distance from the surface layer of the discolored portion compared with a packaged product packaged together with air. With these features, the method for preventing discoloration of a cut of raw tuna meat can increase the production yield as a product.

Up to the sealing step in the method for preventing discoloration of the cut of raw tuna meat, the entire contents previously described with respect to the method for producing a packaged raw tuna meat described above can be applied.

In the refrigerated storage step, the packaged raw tuna meat obtained after the sealing step is stored under refrigeration. The temperature in the refrigerated storage step is preferably cool temperature, for example, not higher than 10°C, not higher than 4°C, not higher than 2°C, or not higher than 0°C, and preferably a temperature higher than the freezing temperature, for example, a temperature of 0°C +/- 2°C. With the temperature in the refrigerated storage step within the above range, the method can further prevent discoloration of the cut of raw tuna meat to more sufficiently preserve the hue during the period until unpacking the packaged product and in some instances also after unpacking the packaged product and maintain a good hue over a longer period compared with related products known in the art.

The refrigerated storage step allows the storage to be continued until unpacking the packaged product to utilize or eat the cut of raw tuna meat. Duration of the refrigerated storage can be, for example, at least one week or can be at least four weeks, in terms of preserving the freshness, hue, texture, and the like of the cut of raw tuna meat. The duration of the refrigerated storage can be terminated at a range in which the hue and the like of the cut of raw tuna meat can be preserved.

The method for preventing discoloration of a cut of raw tuna meat can further include a step of unpacking the packaged raw tuna meat stored under refrigeration. The method of unpacking the package can be selected according to the method of packaging, and, for example, opening, cutting, peeling, and releasing a fastener can be applied without limitation.

The packaged raw tuna meat obtained through the method for preventing discoloration of a cut of raw tuna meat prevents the progress of discoloration of the cut of raw tuna meat also after unpacking the package and can preserve the hue of the cut of raw tuna meat over a longer period than related products known in the art. The packaged raw tuna meat obtained through the method for preventing discoloration of a cut of raw tuna meat also prevents the occurrence of a discolored portion in the cut of raw tuna meat and can reduce an area of the discolored portion if occurs and preferably limit the area only to a shallow portion of the surface layer, and thus can increase the production yield in preparing a final product also when the packaged raw tuna meat is stored for a long period. The packaged raw tuna meat obtained using an inert gas at the time of packaging can prevent discoloration of the cut of raw tuna meat not only as the packaged product but also after unpacking the package over a further longer period compared with related products known in the art.

The packaged raw tuna meat according to the present disclosure and the cut of raw tuna meat obtained by the method for preventing discoloration of a cut of raw tuna meat are a cut of raw tuna meat in which the hue and also freshness are well preserved as the cut of raw tuna meat is well maintained.

The cut of raw tuna meat according to the present disclosure can be identified by an evaluation method below.

Identification of discolored area

The cut of raw tuna meat obtained from the packaged raw tuna meat according to the present disclosure has a smaller discernible discolored portion on the surface of or inside the meat compared with a cut of raw tuna meat obtained from a related packaged product known in the art in which the cut of raw tuna meat is packaged together with air. Thus, whether a subject packaged raw tuna meat is a packaged raw tuna meat according to the present disclosure can be identified by examining the discolored area of the resulting cut of raw tuna meat.

In the evaluation method, the packaged product is unpacked to remove a cut of raw tuna meat, a portion of the cut of raw tuna meat is cut out, and the cutout is used as an evaluation sample. The evaluation sample is cut at the central portion, and the cut surface is observed. The hue changes from a dark red at the time of cutting to scarlet and a dark brown, and thus from the presence or absence of discoloration from the hue at the time of cutting, the presence or absence of a discolored surface or discoloration in the inside, or the thickness of the discolored portion, it can be determined whether the evaluation sample is the packaged raw tuna meat according to the present disclosure or a comparative product packaged under air.

Specifically, the packaged product is placed under conditions of a room temperature of 18°C and a relative humidity from 60 to 90%, the package is unpacked, a cut of raw tuna meat removed from the package is cut at the central portion, and the thickness from the surface of the discolored portion is measured every time a predetermined time elapses. If a plurality of layers exhibiting hues discernibly different is formed in the thickness direction, each thickness can be measured. In comparison with a related product known in the art packaged together with air, a small thickness of the discolored portion can identify the cut of raw tuna meat according to the present disclosure.

The cut of raw tuna meat contained in the packaged raw tuna meat according to the present disclosure is prevented from discoloring as the packaged product and in some instances also after unpacking the package and can preserve a good hue over a longer period compared with related products known in the art. Thus, the cut of raw tuna meat having a good hue, the cut of raw tuna meat obtained after landing followed by cutting, can be obtained over a long period. In addition, the cut of raw tuna meat having a good hue, the cut of raw tuna meat obtained after landing followed by cutting, can be stored over a long period and then further processed to provide a processed tuna food product with a high product value.

SECOND EMBODIMENT

A second embodiment of the packaged raw tuna meat according to the present disclosure is a packaged raw tuna meat containing an oxygen-impermeable packaging member and a cut of raw tuna meat tightly packaged with the packaging member, in which an amount of gas inside the package is not more than 21 mL per kg of the cut of raw tuna meat.

A second embodiment of the method for producing a packaged raw tuna meat according to the present disclosure is a method for producing a packaged raw tuna meat, the method including: cutting a tuna after landing to obtain a cut of raw tuna meat; and tightly packaging the cut of raw tuna meat with an oxygen-impermeable packaging member and making an amount of gas inside the package not more than 21 mL per kg of the cut of raw tuna meat.

A second embodiment of the method for preventing discoloration of a cut of raw tuna meat is a method for preventing discoloration of a cut of raw tuna meat, the method including: cutting a tuna after landing to obtain a cut of raw tuna meat; and tightly packaging the cut of raw tuna meat with an oxygen-impermeable packaging member and making an amount of gas inside the package not more than 21 mL per kg of the cut of raw tuna meat to obtain the packaged raw tuna meat.

Hereinafter, the second embodiment will be described; however, for a common configuration and an optional configuration in the disclosure according to the second embodiment and the disclosure according to the first embodiment described above, the description can be applied to each other. For the second embodiment, parts different from the first embodiment described above will be mainly described.

One aspect of the present disclosure can provide a packaged raw tuna meat in which a cut of raw tuna meat is tightly packaged with the packaging member, an amount of gas inside the package is not more than 21 mL per kg of the cut of raw tuna meat, and thus the cut of raw tuna meat is prevented from discoloring during the period in the package and also after unpacking the package.

According to one aspect of the present disclosure, the cut of raw tuna meat obtained by cutting after landing is tightly packaged in a substantially vacuum or vacuum state with not more than a predetermined amount of gas, and thus this can delay the progress of the change in the hue of the cut of raw tuna meat over time described above. That is, one aspect of the present disclosure can provide a packaged raw tuna meat having what is called good colorfastness. This tendency to delay the hue change can be observed in the state of the packaged product and can be observed also after unpacking the package.

Furthermore, in the second embodiment of the packaged raw tuna meat according to the present disclosure, the cut of raw tuna meat is tightly packaged in a substantially vacuum or vacuum state as described above, and thus this can delay the hue change of the cut of raw tuna meat during the period in the package and in some instances also after unpacking the package over a longer period than in packaged raw tuna meat known in the art. In addition, the second embodiment of the packaged raw tuna meat according to the present disclosure can maintain a good hue state longer than related products known in the art.

Moreover, in the second embodiment of the method for preventing discoloration of a cut of raw tuna meat according to the present disclosure, the method includes packaging a cut of raw tuna meat in a substantially vacuum or vacuum state as described above, and thus this can delay the hue change of the cut of raw tuna meat as a packaged product over a longer period and in some instances can maintain a good hue state for longer period also after unpacking the package compared with related products known in the art.

Packaged raw tuna meat

The second embodiment of the packaged raw tuna meat according to the present disclosure is a packaged raw tuna meat containing an oxygen-impermeable packaging member and a cut of raw tuna meat tightly packaged with the packaging member, in which an amount of gas inside the package is not greater than 21 mL per kg of the cut of raw tuna meat.

The packaging member used in the packaged raw tuna meat is preferably a film member having mechanical properties of low elongation and high flexibility. The cut of raw tuna meat tightly packaged in a highly fresh state may have what is called a rising phenomenon after packaging, the phenomenon caused by the rigor mortis of the cut of raw tuna meat. Use of a packaging member with large elongation may create a gap between the cut of raw tuna meat and the packaging member due to the above rising. The gas within the package are gathered into this gap, and contact with the gathered gas may discolor the periphery of the rising portion of the cut of raw tuna meat. A packaging member having small elongation is less likely to create the gap due to rising described above and thus tends to further prevent discoloration of the periphery of the rising portion. In addition, a packaging member with high flexibility can conform to the shape of the cut of raw tuna meat with high precision and uniformly wrap the cut of raw tuna meat without crushing the shape in packaging the cut of raw tuna meat. That is, the packaging member with high flexibility can increase the degree of adhesion to the cut of raw tuna meat. Using such a packaging member having mechanical properties of low elongation and high flexibility allows the cut of raw tuna meat to be tightly packaged with a higher degree of vacuum.

The elongation of the packaging member can be evaluated using tensile strength or elongation at break as an index. The tensile strength and elongation at break are values measured in accordance with JIS K 7127 in conditions of 23°C and 50% RH.

The tensile strength of the packaging member may be, for example, not more than 250 MPa, or may be from 80 MPa to 250 MPa or from 100 MPa to 200 MPa. The tensile strength of the packaging member may be different between the longitudinal direction and the lateral direction, and the tensile strength in the longitudinal direction and the lateral direction can be adjusted according to, for example, the shape and material of the packaging member. For example, when the packaging member is a film member prepared by extrusion molding, the longitudinal direction in the extrusion molding is the longitudinal direction of the packaging member, and the width direction of the extrusion molding is the lateral direction of the packaging member, the tensile strength in the longitudinal direction can be from 80 MPa to 200 MPa or from 100 MPa to 150 MPa, and the tensile strength in the lateral direction can be from 100 MPa to 250 MPa or from 130 MPa to 200 MPa. The tensile strength in the longitudinal direction and the tensile strength in the lateral direction each can be adjusted by controlling the extrusion speed, winding speed, and the like of the film member in the extrusion molding.

The elongation at break of the packaging member may be, for example, not greater than 200%, or may be from 110% to 200% or from 120% to 180%. The elongation at break of the packaging member can be different between the longitudinal direction and the lateral direction according to, for example, the shape and material of the packaging member. For example, when the packaging member is a film member prepared by extrusion molding, the longitudinal direction in the extrusion molding is the longitudinal direction of the packaging member, and the width direction of the extrusion molding is the lateral direction of the packaging member, the elongation at break in the longitudinal direction can be from 120% to 200% or from 130% to 180%, and the elongation at break in the lateral direction can be from 110% to 180% or from 110% to 150%. The tensile strength in the longitudinal direction and the elongation at break in the lateral direction each can be adjusted by controlling the extrusion speed, winding speed, and the like of the film member in the extrusion molding.

The flexibility of the packaging member can be evaluated using Young's modulus (tensile elastic modulus) as an index. The tensile modulus (Young's modulus) is a value measured in accordance with JIS K 7127 in conditions of 23°C and 50% RH.

The tensile modulus of the packaging member may be, for example, not more than 900 MPa, or may be from 500 MPa to 900 MPa or from 650 MPa to 850 MPa. The tensile elastic modulus of the packaging member may be different between the longitudinal direction and the lateral direction, and the tensile strength in the longitudinal direction and the lateral direction can be adjusted according to, for example, the shape and material of the packaging member. For example, when the package member is a film member prepared by extrusion molding, the longitudinal direction in the extrusion molding is the longitudinal direction of the packaging member, and the width direction of the extrusion molding is the lateral direction of the packaging member, Young's modulus in the longitudinal direction can be from 500 MPa to 800 MPa or from 650 MPa to 700 MPa, and Young's modulus in the lateral direction can be from 550 MPa to 850 MPa or from 650 MPa to 850 MPa. The tensile strength in the longitudinal direction and the tensile elastic modulus in the lateral direction each can be adjusted by controlling the extrusion speed, winding speed, and the like of the film member in the extrusion molding.

A thickness of the packaging member is, for example, preferably from 15 $\mu$m to 80 $\mu$m, from 20 $\mu$m to 70 $\mu$m, from 30 $\mu$m to 60 $\mu$m, or from 35 $\mu$m to 50 $\mu$m to preferably exhibit the mechanical properties described above.

The packaging member having oxygen permeability and mechanical properties described above is preferred in terms of more sufficiently tightly packaging the cut of raw tuna meat, and any packaging member satisfying the above conditions can be used. Examples of the packaging member having oxygen permeability and mechanical properties described above may include coextruded multilayer films containing ethylene vinyl alcohol (EVOH). Examples of the coextruded multilayer film containing EVOH may include "Krehalon ML40G" (trade designation, available from Kureha Corporation). Krehalon ML40G has a multi-layer structure with polyethylene terephthalate (PET), polyamide (PA), EVOH, and polyolefin (PO) layered in this order (multilayer structure with PET/PA/EVOH/PO) and a thickness of 40 $\mu$m.

The tightly closable mechanism in the packaging member may be integrated with the packaging member or may be separable. Examples of the packaging member having the tightly closable mechanism may include a packaging member having a fastener mechanism capable of fastening, an adhesive member, and the like in a portion of the packaging member. The packaging member need not include the tightly closable mechanism in advance. In this case, the packaging member is to be tightly closed separately by a physically tightly closable mechanism. Examples of such a tightly closable mechanism may include thermocompression bonding (heat sealing), rubber fasteners, adhesives, adhesive sheets, and clips.

Specific examples of the packaging member may include a bag made of a composite film of nylon and polyethylene and a box made of polypropylene.

In the packaged raw tuna meat, the amount of gas inside the package is not more than 21 mL per kg of the cut of raw tuna meat. The amount of gas inside the packaged raw tuna meat is within the above range, and this can prevent discoloration in the cut of raw tuna meat after cutting and also the progress of discoloration of the cut of raw tuna meat after unpacking the package.

The amount of gas inside the package can be determined by a method below. After packaging, the packaged product is allowed to stand for 10 minutes and then placed in a container filled with a liquid, such as water, to apply pressure to the entire packaged product, and gas bubbles are gathered into one point on an upper surface of the cut of tuna meat inside the packaged product. The gas bubbles gathered on the surface are drawn into a syringe while visually observed, the amount collected in the syringe is measured, and the resulting amount is taken as the amount of gas. The measurement is carried out at room temperature (from 18°C to 20°C).

The amount of gas inside the package may be, for example, not greater than 15 mL, not greater than 10 mL, not greater than 8 mL, not greater than 6 mL, not greater than 4 mL, not greater than 3 mL, not greater than 2.5 mL, not greater than 2 mL, not greater than 1.5 mL, not greater than 1 mL, not greater than 0.5 mL, not greater than 0.3 mL, or not greater than 0.2 mL per kg of the cut of raw tuna meat, or may be not greater than the detection limit, for example, may be 0 mL. The lower the amount of gas, the more effectively the discoloration can be prevented.

The type of "gas" in the second embodiment is not particularly limited, and examples of the gas may include air, oxygen gas, inert gas, and mixed gases of these gases. Examples of the inert gas may include nitrogen gas, carbon dioxide gas, helium gas, and argon gas.

Method for producing packaged raw tuna meat

The second embodiment of the method for producing a packaged raw tuna meat according to the present disclosure includes: cutting a tuna after landing to obtain a cut of raw tuna meat (hereinafter also referred to as the cutting step); and tightly packaging the cut of raw tuna meat with an oxygen-impermeable packaging member and making an amount of gas inside the package not more than 21 mL per kg of the cut of raw tuna meat (hereinafter also referred to as the packaging step). The method includes an additional step as necessary. The present production method can efficiently provide the packaged raw tuna meat described above.

In the packaging step, the cut of raw tuna meat is tightly packaged, and the amount of gas inside the package is made not more than 21 mL per kg of the cut of raw tuna meat. The method of packaging is not particularly limited and can be appropriately carried out according to the shape of the packaging member, a packaging mechanism, and the like. In addition, to more reliably preserve the type of gas, a composition ratio of the gases inside the package, and the like, a plurality of types of packaging members may be used. The packaging can be carried out at room temperature, for example, in an environment of 18 to 20°C.

The tight packaging can be carried out by wrapping the cut of raw tuna meat with the packaging member to allow the packaging member to conform to the shape of the cut of raw tuna meat. At this time, the packaging is preferably carried out to leave no gas between the cut of raw tuna meat and the packaging member. The tight packaging of the cut of raw tuna meat can further reduce the amount of gas inside the resulting packaged raw tuna meat.

The amount of gas inside the packaged raw tuna meat can be made, for example, not greater than 21 mL per kg of cut of raw tuna meat by tightly packaging as described above. In addition, to more reliably make the amount of gas not more than a predetermined amount of gas, a method for reducing the amount of gas inside the package can be used. The method for making the amount of gas inside the package not more than a predetermined amount may be any method well known in the art for this purpose, and examples of such a method may include degassing. The degassing may be carried out, for example, using a vacuum packaging machine or may be carried out by applying pressure from the outside. Furthermore, in addition to the above, the method for making the amount of gas inside the package not more than a predetermined amount may be carried out using a method using an oxygen scavenger or the like.

The method for producing a packaged raw tuna meat may further include sealing the packaging member after the tight packaging (hereinafter also referred to as the sealing step) to preserve the amount of gas inside the packaged product after the tight packaging for a long period. The method of sealing can be appropriately selected according to the type of packaging member. In terms of retaining the gas inside the package, the method of sealing is preferably, for example, a heat sealing. Through the sealing step, the packaged raw tuna meat according to the present disclosure can be stored for longer period, the packaged raw tuna meat in which the cut of raw tuna meat is packaged to make the amount of gas inside the package not more than a predetermined amount.

The method for producing a packaged raw tuna meat may further include storing the packaged raw tuna meat under refrigeration, the packaged raw tuna meat obtained after the packaging step or the sealing step. The method further including storing under refrigeration can prevent discoloration of the cut of raw tuna meat over a longer period.

Method for preventing discoloration of cut of raw tuna meat

The second embodiment of the method for preventing discoloration of a packaged raw tuna meat according to the present disclosure includes: cutting a tuna after landing to obtain a cut of raw tuna meat (hereinafter also referred to as the cutting step); and tightly packaging the cut of raw tuna meat after cutting with an oxygen-impermeable packaging member, and making an amount of gas inside the package not greater than 21 mL per kg of the cut of raw tuna meat to obtain the packaged raw tuna meat (hereinafter also referred to as the packaging step). The method for preventing discoloration of a cut of raw tuna meat may further include storing the resulting cut of raw tuna meat under refrigeration (hereinafter also referred to as the refrigerated storage step). The method for preventing discoloration of a cut of raw tuna meat may include an additional step as necessary.

Up to the packaging step in the method for preventing discoloration of the cut of raw tuna meat, the entire contents previously described with respect to the method for producing a packaged raw tuna meat described above can be applied.

The refrigerated storage step allows the storage to be continued until unpacking the packaged product to utilize or eat the cut of raw tuna meat. Duration of the refrigerated storage can be, for example, at least 3 days, at least 4 days, at least 5 days, at least 6 days, at least 1 week, at least 2 weeks, at least 3 weeks, or at least 4 weeks, in terms of preserving the freshness, hue, texture, and the like of the cut of raw tuna meat. The duration of the refrigerated storage can also be terminated, for example, at a range in which the hue and the like of the cut of raw tuna meat can be preserved.

The packaged raw tuna meat according to the present disclosure and the cut of raw tuna meat obtained by the method for preventing discoloration of a cut of raw tuna meat are a cut of raw tuna meat in which the hue as the cut of raw tuna meat is well maintained and also freshness is well preserved.

A cut of raw tuna meat according to the present disclosure can be identified by the evaluation methods below.

(1) Hue evaluation

The cut of raw tuna meat according to the present disclosure is tightly packaged, and the amount of gas inside the package is extremely small or vacuum, and thus this delays a transition of the color of the cut of raw tuna meat from scarlet to dark brown and well prevents the hue change. This hue change can be determined by evaluating a change over time from processing to unpacking the package and a change over time from opening a sealed packaged product until a predetermined time elapses, for example, based on an a* value and an a*/b* value measured with a chroma meter.

The a* value of the cut of raw tuna meat in the packaged raw tuna meat after a lapse of not less than 4 days (e.g., such as a lapse of 4 days, a lapse of 5 days, a lapse of 6 days, or a lapse of 7 days) from packaging, the a* value measured with a chroma meter immediately after opening the packaged raw tuna meat, after a lapse of 0.5 hours, after a lapse of 2 hours, after a lapse of 4 hours, or after a lapse of 8 hours from the opening, may be, for example, not less than 14.05, not less than 15.00, not less than 16.00, not less than 17.00, not less than 17.30, not less than 17.50, or not less than 17.7. The upper limit value of the a* value is not particularly limited and can be, for example, not greater than 20 or not greater than 19.

The a*/b* value of the cut of raw tuna meat in the packaged raw tuna meat after a lapse of not less than 4 days (e.g., such as a lapse of 4 days, a lapse of 5 days, a lapse of 6 days, or a lapse of 7 days) from packaging, the a*/b* value measured with a chroma meter immediately after opening the packaged raw tuna meat, after a lapse of 0.5 hours, after a lapse of 2 hours, after a lapse of 4 hours, or after a lapse of 8 hours from the opening, may be, for example, not less than 96%, not less than 99%, not less than 100%, not less than 101%, or not less than 102%, and not greater than 120%, not greater than 110%, or not greater than 105%, relative to the a*/b* value after a lapse of 0.5 hours from opening the packaged raw tuna meat.

The a*/b* of the cut of raw tuna meat in the packaged raw tuna meat after a lapse of not less than 4 days (e.g., such as a lapse of 4 days, a lapse of 5 days, a lapse of 6 days, or a lapse of 7 days) from packaging, the a*/b* measured with a chroma meter, is not less than 1.46, not less than 1.48, not less than 1.50, not less than 1.60, or not less than 1.70 immediately after opening the packaged raw tuna meat and may be not less than 1.29, not less than 1.30, not less than 1.31, not less than 1.34, not less than 1.40, or not less than 1.45 after a lapse of 0.5 hours, after a lapse of 2 hours, after a lapse of 4 hours, or after a lapse of 8 hours from the opening of the packaged raw tuna meat. The upper limit value of the a*/b* is not particularly limited and can be, for example, not greater than 1.90 or not greater than 1.80.

(2) K value

K value is an index expressed by Formula (1) below and is determined by measuring a degree of progress of degradation of ATP (adenosine triphosphate) and converting a result of determination and evaluation of freshness into a numeric value.

$$K \text{ value} = (HxR + Hx)/(ATP + ADP + AMP + IMP + HxR + Hx) \times 100 \qquad (1)$$

In the above formula, ATP represents a content of adenosine triphosphate, ADP represents a content of adenosine diphosphate, AMP represents a content of adenosine monophosphate, IMP represents a content of inosinic acid, HxR represents a content of inosine, and Hx represents a content of hypoxanthine.

ATP in fish meat is degraded after the death of a fish body and gradually decomposes into ADP, AMP, IMP, HxR, and Hx. ADP, AMP, IMP, HxR, and Hx are compounds produced in the degradation process of ATP and also referred to as ATP related substances. Smaller K value means that the ratio of the total amount of HxR and Hx relative to the total amount of ATP and ATP degradation related substances in a measurement target is smaller, meaning that decomposition from IMP to HxR or Hx has not progressed sufficiently. That is, the smaller the value of the K value, the more ATP degradation related substances up to IMP (i.e., ATP, ADP, AMP, and IMP) remain, meaning that the fish meat has a high freshness.

The K value of the cut of raw tuna meat obtained by the method for preventing discoloration of a cut of raw tuna meat can be, for example, not greater than 35%, preferably not greater than 15%, and more preferably not greater than 10%.

An embodiment of the method for providing a cut of raw tuna meat according to the present disclosure is a method for providing a cut of raw tuna meat, the method including the step of opening a packaged raw tuna. In the method for providing a cut of raw tuna meat, the a* value of the cut of raw tuna meat measured with a chroma meter may be not less than 17.05 or not less than 17.38, and the K value of the cut of raw tuna meat expressed by Formula (1) above may be not greater than 35% after a lapse of 8 hours from after opening the packaged raw tuna meat.

While several embodiments have been described above, for common configurations, the description can be applied to each other. In addition, the present disclosure is not at all limited to the embodiments described above.

EXAMPLES

Hereinafter, the contents of the present disclosure will be described in more detail with reference to examples and comparative examples. However, the present disclosure is not limited to the examples described below.

FIRST ASPECT

Preparation of test

(1) Rearing of tuna

In a open net pen of 40 m x 45 m, 1500 tunas with a body weight of about 3 kg and a caudal furca length of about 55 cm were accommodated and rearing was started. Mackerel and sardine were used in the feed, and the feed was fed to satiation usually once daily or once in two days during winter. The rearing was started in July and continued for not less than three years, and then the tunas were paralyzed using an electrical shocker and landed. Immediately after landing, blood was removed, and the tunas were freshly killed. Gills and guts were removed using a common method, and tuna GGs were obtained. The weight of the resulting tuna GG was not less than 80 kg, and the body mass index was not less than 24.

(2) Cutting

The cutting was carried out in a cutting chamber at a room temperature of 18°C to 20°C. A chopping block said to be less likely to be slippery was selected. The fish body was fixed only by hand, and no fixing tool was particularly used. An operator wore plastic gloves on both hands and further wore a cut-resistant glove on a hand not having a kitchen knife.

As soon as the resulting tuna GG was obtained, the head and tail portions were cut off from the tuna GG using a kitchen knife with a blade length from 20 cm to 28 cm, then the dorsal side and then the ventral side were cut with the kitchen knife according to a common procedure, and the fish meat was cut and processed into loins.

In the cutting, when both sides of the center line on the dorsal side were first cut with the kitchen knife, the surface of the tuna GG was cut at a depth of several millimeters, and then the fish body was carefully cut little by little with the blade of the kitchen knife at an angle of approximately 10° to 30° to the fish body until the neural spine was seen. In addition, in cutting, the detached body was gently pinched to prevent the body from tearing, and the procedure was carefully carried out. The ventral side was also cut in the same manner. The body was processed within several hours after landing and thus had elasticity, but the cutting was carefully carried out using the relatively short kitchen knife, and thus four loins each were successfully obtained.

Then, trimming was also carried out to adjust the shape of the loins. At the time of trimming, the kitchen knife was operated to slice the tuna body with the kitchen knife nearly parallel to the tuna body at not more than 5°. As described above, loins were obtained at 3 hours after the fresh killing. The length of the loins was from 65 cm to 90 cm, and the thickness was from 15 cm to 23 cm.

In storing the resulting loin, the loin was wrapped with water-absorbing paper, then directly contained in a plastic bag, and the whole plastic bag containing the loin was sunk in ice water (water temperature of 0°C +/- 2°C) contained in a 500-L volume container box to sink the whole loin in the ice water and was stored under refrigeration in this state until use.

In preparing blocks from the resulting loin, approximately 200 g to 3.5 kg of substantially cubic blocks having a thickness of approximately 5 cm to 25 cm were cut out from the loin obtained by cutting or the loin stored under refrigeration using a kitchen knife with a blade length from 20 cm to 28 cm.

(3) Packaging member, water-absorbing sheet, etc.

The following test was carried out using the loin or block prepared as described above. In preparing a sashimi as an evaluation sample, a 'saku' (smaller block), of about 4 cm to 10 cm x about 5 cm to 20 cm x about 1 cm to 2 cm was prepared from the red meat portion or the medium fatty meat portion of the dorsal side of the loin or the block, and a slice with a thickness of about 0.5 cm to 1.0 cm was further prepared and used as the evaluation sample.

Types of packages used for the evaluation are shown in Table 1. Oxygen permeability of each packaging member is shown in Table 1. In Table 1, "*1" means that a packaging member exhibited little oxygen permeation, and "*2" means that a packaging member of each size of 40.0 cm x 20.0 cm, 40.0 cm x 30 cm, or 40.0 cm x 50.0 cm was appropriately selected and used based on the sample size. In Table 1, PE is an abbreviation for polyethylene, and NY is an abbreviation for nylon.

Products used and shown in Table 1 are as follows.
Plastic container: "Keep Lock Easy Clean" (deep tightly closing container, trade designation, available from Pearl Metal Co. Ltd.)
Freezer back: "Ziploc (trade name)" (trade designation, available from Asahi Kasei Home Products Corporation)
Nylon polyethylene bag: "Shin'emon" (trade designation, available from Kurolin Chemicals Co., Ltd.)
Water-absorbing sheet: "Shinsen Plate" (trade designation, available from Kinsei Seishi Co., Ltd.)
Cooking sheet: "Fuji cooking paper" (trade designation, available from Fujinap Co., Ltd.) Water-resistant paper: "Sunproof (trade name) G" (cut paper) (trade designation, available from Asahi Kasei Home Products Corporation)

Table 1

| Type | Packaging member | | | | Water-absorbing sheet, etc. |
|---|---|---|---|---|---|
| | | Material | Oxygen permeability ($cm^3/m^2 \cdot 24\ hr \cdot atm$) | Size (cm) | |
| I | Plastic container | Polypropylene | -*1 | 13.5 x 13.5 x 7.0 | Water-absorbing sheet |
| | Freezer back | PE | 2000 to 3000 | 27.3 x 26.8 | |
| II | Nylon polyethylene bag | NY/PE | 48 | 40.0 x 20.0 to 50.0*2 | Water-absorbing sheet |
| III | Nylon polyethylene bag | NY/PE | 48 | 40.0 x 20.0 to 50.0*2 | Cooking sheet water-resistant paper |

(continued)

| Type | Packaging member | | | | Water-absorbing sheet, etc. |
| | | Material | Oxygen permeability (cm$^3$/m$^2$·24 hr·atm) | Size (cm) | |
| --- | --- | --- | --- | --- | --- |
| IV | Plastic bag | Polyvinyl chloride | 3900 to 13000 | 30.0 x 45.0 | Cooking sheet water-resistant paper |

Example 1-1

(1) Preparation of Sample 1 and Control Sample

The tuna GG was cut and processed into blocks within 24 hours after landing, 6 blocks of about 1 kg were prepared, and divided into 3 blocks for preparing Sample 1 and 3 blocks for preparing Control Sample.

The blocks for preparing Sample 1 obtained as described above (weight: 1.14 kg, 1.14 kg, and 1.26 kg) were divided into smaller blocks (size: a length of approximately 7 cm, a width of approximately 7 cm, and a thickness of approximately 1 cm to 2 cm), each smaller block was packaged as follows using the packaging members and the water-absorbing sheet of Type I, and Sample 1 was obtained.

The block was sandwiched with the water-absorbing sheet and then contained in the plastic container with a lid, and then the plastic container was placed in the freezer back. Then, in a state where a fastener of the freezer back was fastened in advance, a plastic pipette for gas injection was inserted between the plastic container and the lid of the plastic container, and nitrogen gas was injected. Once the freezer back inflated with nitrogen gas leaking from the plastic container, the freezer back was compressed by hand to vent the gas inside the freezer back while nitrogen gas was kept injected, and allowed to stand until the freezer back inflated again with nitrogen gas leaking from the plastic container. This operation was repeated four times, and the gas inside the plastic container and inside the freezer back was displaced.

Finally, the pipette was removed from the plastic container at a stage where the freezer back inflated with nitrogen gas, and the plastic container lid was fastened. Then, while the freezer back was slowly compressed to vent the gas, the pipette was removed also from the freezer back, and then the fastener of the freezer back was fastened to seal the freezer back. Sample 1, which was a packaged raw tuna meat in which a cut of raw tuna meat was packaged, was thus prepared. Sample 1 had an oxygen concentration in a gas inside the package of not greater than 0.1 vol.% and an amount of oxygen from 0.2 mL to 1.5 mL per kg of the cut of raw tuna meat. In addition, Sample 1 was determined to have an amount of gas inside the package of not greater than 5 L per kg of the cut of raw tuna meat. The prepared Sample 1 was placed in a storage box made of polystyrene foam and stored in a refrigerator kept cooled at approximately 0°C to 2°C until evaluation.

In addition, for the blocks for preparing Control Sample (weight: 0.92 kg, 1.24 kg, and 1.58 kg) each, the packaging member and the water-absorbing sheet of Type IV were used, and Control Sample was prepared. First, the entire block was wrapped with the cooking sheet and further wrapped with the water-resistant paper from the above, and this was contained in the plastic bag. Then, the plastic bag was filled with air instead of nitrogen gas, the mouth of the plastic bag was sealed using a rubber band, and Control Sample was obtained. Control Sample had an oxygen concentration in a gas inside the package of not less than 0.1 vol.% and an amount of oxygen of 200 mL per kg of the cut of raw tuna meat. In addition, Control Sample was determined to have an amount of gas inside the package of 1000 mL per kg of the cut of raw tuna meat. The prepared Control Sample was placed in a storage box made of polystyrene foam and stored in a refrigerator kept cooled at approximately 0°C to 2°C until evaluation.

(2) Evaluation

For Sample 1 and Control Sample prepared as described above, one packaged raw tuna meat for each Sample, was opened after a lapse of 5 days and after a lapse of 8 days after landing, sashimi was prepared from the cut of raw tuna meat removed from the package, and the hue and the hue change over time on the surface of or inside the sashimi were observed and evaluated.

In Sample 1, the cut of raw tuna meat was packaged using nitrogen gas, and thus the color of the surface of the cut of raw tuna meat in contact with nitrogen changed to dark purple or red purple during the period in the package, but unpacking the package and exposing the cut of raw tuna meat to air allowed the color of the discolored surface to change to red purple or bright red similar to that at the time of cutting. No discoloration was observed in the surface layer or inside of the sashimi prepared from the packaged raw tuna meat of Sample 1 opened after a lapse of 5 days and after a lapse of 8 days after landing. In contrast, in Control Sample, discoloration to a dark red was observed on the surface and in the surface layer portion approximately 5 mm from the surface of the sashimi prepared from the packaged product opened after a lapse of 5 days after landing, and discoloration to dark brown was observed on the surface and in the surface layer portion approximately 15 mm from the surface of the sashimi prepared from the packaged product opened after a lapse of 8 days after landing.

As in the results described above, it can be seen that during the period from preparing the packaged product until unsealing the packaged product, and also after unsealing the packaged product, the cut of raw tuna meat obtained from Sample 1 had a smaller discolored portion than the cut of raw tuna meat obtained from Control Sample. Thus, in Sample 1, the cut of raw tuna meat is prevented from discoloring compared with Control Sample, and in addition, the discolored portion if present can be reduced to a smaller portion on the surface side than in the cut of raw tuna meat obtained from Control Sample. This means that the packaged raw tuna meat of Sample 1 can reduce the discolored portion to be cut off and increase the production yield in obtaining a final product, such as sashimi, from the packaged raw tuna meat compared with Control Sample. In addition, it was found that the sashimi obtained from Sample 1 had a good flavor when eaten.

For Sample 1, the storage period was further extended, and the packaged product was opened after a lapse of 11 days after landing to prepare sashimi as described above, and the hue of the surface and inside of the sashimi was observed. The sashimi prepared from the packaged product after a lapse of 11 days after landing irreversibly discolored only in the surface layer portion approximately 1 mm from the surface, but no discoloration was observed inside this sashimi.

Example 1-2

(1) Preparation of Sample 2 and Control Sample

The tuna GG was cut and processed into blocks within 24 hours after landing, 2 blocks of about 2 kg were prepared, each block was cut in half, and 2 blocks for preparing Sample 2 and 2 blocks for preparing Control Sample were prepared.

The block for preparing Sample 2 obtained as described above was packaged as follows using the packaging member and the water-absorbing sheet of Type II, and Sample 2 was obtained.

The water-absorbing sheet was affixed to the surface of the block for preparing Sample 2, and then the block was contained in the nylon polyethylene bag of Type II. Then, in a state where gas inside the nylon polyethylene bag was vented as much as possible, a plastic pipette for gas injection was inserted inside the nylon polyethylene bag, and nitrogen gas was injected in a state where the mouth portion of the nylon polyethylene bag was narrowed. Once the nylon polyethylene bag inflated, the narrowed mouth portion of the nylon polyethylene bag was loosened while nitrogen gas was kept injected, and as much gas as possible was extruded from the inside of the nylon polyethylene bag while the nylon polyethylene bag was compressed by hand. Then, the mouth portion of the nylon polyethylene bag was narrowed again, and the nylon polyethylene bag was allowed to stand until it inflated. This operation was repeated four times, and the gas inside the nylon polyethylene bag was displaced.

Thereafter, in a state where some nitrogen gas remained in the nylon polyethylene bag, the plastic pipette was removed, and the nylon polyethylene bag was sealed with a rubber band at the portion that had been narrowed. Sample 2, which was a packaged raw tuna in which a cut of raw tuna meat was packaged, was thus prepared. Sample 2 had an oxygen concentration in a gas inside the package of not more than 0.1 vol.% and an amount of oxygen from 0.2 mL to 1.5 mL per kg of the cut of raw tuna meat. In addition, Sample 2 was determined to have an amount of gas inside the package of not more than 5 L per kg of the cut of raw tuna meat. The prepared Sample 2 was placed in a storage box made of polystyrene foam and stored in a refrigerator kept cooled at approximately 0°C to 2°C until evaluation.

In addition, for the block for preparing Control Sample, the packaging member and the water-absorbing sheet of Type IV were used, and Control Sample was prepared. First, the entire block was wrapped with the cooking sheet and further wrapped with the water-resistant paper from the above, and this was contained in the plastic bag. Then, the plastic bag was filled with air instead of nitrogen gas, the mouth of the plastic bag was sealed using a rubber band, and Control Sample was obtained. Control Sample had an oxygen concentration in a gas inside the package of not less than 0.1 vol.% and an amount of oxygen of 200 mL per kg of the cut of raw tuna meat. In addition, Control Sample was determined to have an amount of gas inside the package of 1000 mL per kg of the cut of raw tuna meat. The prepared Control Sample was placed in a storage box made of polystyrene foam and stored in a refrigerator kept cooled at approximately 0°C to 2°C until evaluation.

(2) Evaluation

For Sample 2 and Control Sample prepared as described above, one packaged raw tuna meat for each Sample was opened after a lapse of 4 days and after a lapse of 6 days after landing (corresponding to after a lapse of 3 days and after a lapse of 5 days after packaging, respectively), sashimi was prepared from the cut of raw tuna meat removed from the package, and the hue and the hue change over time on the surface of or inside the sashimi were observed and evaluated.

As a result, Sample 2 was packaged using nitrogen gas, and thus the color of the surface of the cut of raw tuna meat in contact with nitrogen changed to dark purple or red purple during the period in the package, but unpacking the package and exposing the cut of raw tuna meat to air allowed the color of the discolored surface to change to red purple or bright red similar to that at the time of cutting. In addition, in Sample 2, no discolored portion was observed on the surface of or inside the sashimi prepared from the packaged raw tuna meat opened after a lapse of 4 days and after a lapse of 6 days after landing. In contrast, in Control Sample, discoloration was observed on the surface and in the surface layer of 5 mm to 10 mm of the sashimi prepared from the packaged product opened after a lapse of 4 days after landing, and discoloration was observed on the surface and in a portion of the surface layer of 5 mm to 10 mm of the sashimi prepared from the packaged product opened after a lapse of 6 days after landing.

As in the results described above, Sample 2 was prevented from discoloring to dark brown more than Control Sample, and a better result was obtained. This result revealed that a packaging member having low oxygen permeability provides a similar effect regardless of the shape.

Example 1-3

(1) Preparation of Sample 3-1, Sample 3-2, and Control Sample

The tuna GG was cut and processed into blocks within 24 hours after landing, and blocks from about 1.4 kg to 1.7 kg were prepared. The prepared blocks were stored at 0°C for several hours and then packaged as follows using the packaging member and the water-absorbing sheet of Type III, and Sample 3-1 (a packaged raw tuna meat containing a block weighing 1.72 kg) and Sample 3-2 (a packaged raw tuna meat containing a block weighing 1.74 kg) were obtained.

First, the entire block was wrapped with the cooking sheet and further wrapped with the water-resistant paper from the above, and this was contained in the nylon polyethylene bag. For Sample 3-1, the inside of the nylon polyethylene bag was then degassed using a vacuum packaging machine (V610G series, available from Fuji Impulse Co., Ltd.), and then nitrogen gas was injected. This degassing and the injection of nitrogen were repeated 2 to 4 times to allow the gas to finally remain slightly in the nylon polyethylene bag. The nylon polyethylene bag was sealed with a sealer attached to the vacuum packaging machine, and Sample 3-1 was prepared. For Sample 3-2, degassing and an injection of nitrogen were repeated 2 to 4 times in the same manner as for Sample 3-1, and then the inside of the nylon polyethylene bag was degassed as much as possible using the above vacuum packaging machine. The nylon polyethylene bag was sealed with a sealer attached to the vacuum packaging machine, and Sample 3-2 was prepared.

Sample 3-1 and Sample 3-2 were gases with an oxygen concentration of not more than 0.1 vol.% and an amount of oxygen of 0.2 mL to 1.5 mL per kg of the cut of raw tuna meat. In addition, Sample 3-1 and Sample 3-2 each were determined to have an amount of gas inside the package of not more than 5 L per kg of the cut of raw tuna meat. Each Sample prepared was placed in a storage box made of polystyrene foam and stored in a refrigerator kept cooled at approximately 0°C to 2°C until evaluation.

For the block for preparing Control Sample (weight: 1.46 kg), the packaging member and the water-absorbing sheet of Type IV were used, and Control Sample was prepared. First, the entire block was wrapped with the cooking sheet and further wrapped with the water-resistant paper from the above, and this was contained in the plastic bag. Then, the plastic bag was filled with air instead of nitrogen gas, the mouth of the plastic bag was sealed using a rubber band, and Control Sample was obtained. Control Sample had an oxygen concentration in a gas inside the package of not less than 0.1 vol.% and an amount of oxygen of 200 mL to 600 mL per kg of the cut of raw tuna meat. In addition, Control Sample was determined to have an amount of gas inside the package of 1000 mL to 3000 mL per kg of the cut of raw tuna meat. The prepared Control Sample was placed in a storage box made of polystyrene foam and stored in a refrigerator kept cooled at approximately 0°C to 2°C until evaluation.

(2) Evaluation

For Sample 3-1, Sample 3-2, and Control Sample prepared as described above, each packaged raw tuna meat was opened after a lapse of 5 days after landing (corresponding to after a lapse of 4 days after packaging), and sashimi was prepared from the cut of raw tuna meat removed from the package. The sashimi was stored in a storage condition of 0°C to 2°C, and hues after a lapse of 6 hours and after a lapse of 72 hours each after preparing the sashimi were observed.

As a result, Sample 3-1 and Sample 3-2 were packaged using nitrogen gas, and thus the color of the surface of the cut of raw tuna meat in contact with nitrogen changed to dark purple or red purple during the period in the package, but unpacking the package and exposing the cut of raw tuna meat to air allowed the color of the discolored surface to change to red purple or bright red (scarlet) similar to that at the time of cutting. Both Sample 3-1 and Sample 3-2, when the packages were unpacked, exhibited brighter red color (scarlet) compared with Control Sample. In comparison of Sample 3-1 with Sample 3-2, Sample 3-1 exhibited brighter red color. Furthermore, also after unpacking the package, Sample 3-1 maintained the brighter red color for a longer period compared with Control Sample.

In addition, Sample 3-1 exhibited bright red color both after a lapse of 6 hours and after a lapse of 72 hours from after preparing the sashimi compared with Control Sample. In contrast, in Control Sample, the surface of the cut of raw tuna meat had already been discolored when the packaged product was opened, and discoloration to dark brown was observed from the portion near the surface of the sashimi over time from after preparing the sashimi to 6 hours and 72 hours. In addition, Sample 3-2 also exhibited bright red color similarly to Sample 3-1, compared with Control Sample.

As in the results described above, it was found that a packaged product preserved under a gas having a low oxygen concentration could prevent discoloration during the storage period. In addition, it was found that gas displacement packaging using nitrogen gas could extend a period of preserving a hue compared with Control Sample filled with air.

Example 1-4

(1) Preparation of Sample 4-1, Sample 4-2, Sample 4-3, Sample 4-4, and Control Sample Within 12 hours after landing, the tuna GG was cut and processed into loins, and the loins were placed in a plastic bag, and cooled and stored in ice water. After several hours, the loin was removed from ice water, cut into blocks, and a block of about 1 kg was prepared. The prepared block was packaged in the same manner as Sample 2 in Example 1-2 using the packaging member and the water-absorbing sheet of Type II, and Sample 4-1 was obtained.

In addition, the block prepared as described above was contained using the packaging member and the water-absorbing sheet of Type III, the inside of the nylon polyethylene bag was degassed as much as possible, the nylon polyethylene bag was sealed with a sealer attached to a vacuum packaging machine in the same manner as Sample 3-2 in Example 1-3, and Sample 4-2 was obtained. In addition, Sample 4-3 was obtained by packaging the block prepared as described above in the same manner as in the preparation of Sample 4-1 with the exception that helium gas was used instead of nitrogen gas. Furthermore, Sample 4-4 was obtained by packaging the block prepared as described above in the same manner as in the preparation of Sample 4-1 with the exception that carbon dioxide was used instead of nitrogen gas.

Sample 4-1, Sample 4-2, Sample 4-3, and Sample 4-4 are gases with an oxygen concentration in a gas inside the package of not more than 0.1 vol.% and an amount of oxygen from 0.2 mL to 1.5 mL per kg of the cut of raw tuna meat. In addition, Sample 4-1, Sample 4-2, Sample 4-3, and Sample 4-4 each were determined to have an amount of gas inside the package of not more than 5 L per kg of the cut of raw tuna meat. Each sample of Sample 4-1, Sample 4-2, Sample 4-3, and Sample 4-4 was placed in a storage box made of polystyrene foam and stored in a refrigerator kept cooled at approximately 0°C to 2°C until evaluation.

Using some of the blocks prepared as described above as blocks for preparing Control Sample and using the packaging member and the water-absorbing sheet of Type IV, Control Samples were prepared. First, the entire block was wrapped with the cooking sheet and further wrapped with the water-resistant paper from the above, and this was contained in the plastic bag. Then, the plastic bag was filled with air instead of nitrogen gas, the mouth of the plastic bag was sealed using a rubber band, and Control Sample was obtained. Control Sample had an oxygen concentration in a gas inside the package of not less than 0.1 vol.% and an amount of oxygen from 100 mL to 200 mL per kg of the cut of raw tuna meat. In addition, Control Sample was determined to have an amount of gas inside the package from 500 mL to 1000 mL per kg of the cut of raw tuna meat. The prepared Control Sample was placed in a storage box made of polystyrene foam and stored in a refrigerator kept cooled at approximately 0°C to 2°C until evaluation.

(2) Evaluation

For Sample 4-1, Sample 4-2, Sample 4-3, and Control Sample prepared as described above, each of these packaged blocks was opened after a lapse of 5 days after landing, and a hue of the cut of raw tuna meat was observed.

As a result, in Control Sample, the block had been discolored dark brown on the surface and in the surface layer ranging up to approximately from 5 mm to 8 mm. In contrast, no change was observed at all in Sample 4-1 and Sample 4-2. In Sample 4-3, discoloration was observed in the block on the surface and in the surface layer ranging up to approximately 5 mm but was less than that in a comparative product. Sample 4-4 was also evaluated in the same manner as Sample 4-1 and was determined to reserve the hue.

Example 1-5

(1) Preparation of Sample 5 and Control Sample

Within 24 hours after landing, the tuna GG was cut and processed into loins, and the loins were placed in a plastic bag and stored in a refrigerator set at 0°C. After a lapse of 2 days from landing, the loin was removed from the plastic bag, and two blocks of about 1 kg were prepared. The prepared blocks were divided into a block for preparing Sample 5 and a block for preparing Control Sample.

Sample 5 was obtained by packaging the block for preparing Sample 5 obtained as described above in the same manner as Sample 2 in Example 1-2 using the packaging member and the water-absorbing sheet of Type II. Sample 5 had an oxygen concentration in a gas inside the package of not more than 0.1 vol.% and an amount of oxygen from 0.2 mL to 1.5 mL per kg of the cut of raw tuna meat. In addition, Sample 5 was determined to have an amount of gas inside the package of not more than 5 L per kg of the cut of raw tuna meat. The prepared block of Sample 5 was placed in a storage box made of polystyrene foam and stored in a refrigerator kept cooled at approximately 0°C to 2°C until evaluation.

For the block for preparing Control Sample, the packaging member and the water-absorbing sheet of Type IV were used, and Control Sample was prepared. First, the entire block was wrapped with the cooking sheet and further wrapped with the water-resistant paper from the above, and this was contained in the plastic bag. Then, the plastic bag was filled with air instead of nitrogen gas, the mouth of the plastic bag was sealed using a rubber band, and Control Sample was obtained. The prepared Control Sample was placed in a storage box made of polystyrene foam and stored in a refrigerator kept cooled at approximately 0°C to 2°C until evaluation.

(2) Evaluation

For Sample 5 and Control Sample prepared as described above, one packaged raw tuna meat for each Sample was opened after a lapse of 5 days after landing (corresponding to after 3 days after packaging) and after a lapse of 8 days after landing (corresponding to after 6 days after packaging), the block of the cut of raw tuna meat removed from the package was cut at the center, and the hue of the cross section was observed and evaluated.

Control Sample was opened at a lapse of 5 days after landing and sashimi was prepared from the block of the cut of raw tuna meat removed from the package. As a result, it was observed that the sashimi discolored on the surface and in the surface layer ranging up to from 5 mm to 10 mm after a lapse of 5 hours from preparing the sashimi. In addition, Control Sample was opened after a lapse of 8 days after landing, the block of the cut of raw tuna meat was removed and cut at the center. The cut surface of the block had three layers distinguished by the hue. That is, the surface layer ranging from the surface of the block to 7 mm to 8 mm had been discolored light pink, the layer underneath over a thickness ranging approximately from 3 mm to 10 mm had been discolored light green, and no discoloration was observed further inside. The discoloration to light green indicates that the discoloration progresses more than the light pink discolored portion.

In contrast, Sample 5 was opened after a lapse of 5 days after landing, the block of the cut of raw tuna meat was removed and cut at the center. The block had been discolored light pink from the surface to approximately from 7 mm to 8 mm of the surface layer similarly as in Control Sample, but no discoloration was observed at all in the portion underneath. In addition, Sample 5 was opened after a lapse of 8 days after landing, the block of the cut of raw tuna meat was removed and cut at the center. The block had been discolored only from the surface to approximately 7 mm to 8 mm of the surface layer, no significant change was observed in the thickness of the discolored surface layer portion, and no discoloration was observed inside. These results confirmed that the progress of the hue change was more prevented in Sample 5 compared with Control Sample.

The results described above confirmed that also in packaging after a lapse of approximately 24 hours from cutting, the refrigerated storage of the cut of raw tuna meat from the cutting provides good results similarly as in packaging in succession to the cutting. That is, the results confirmed that Sample 5 tended to have a better hue compared with Control Sample. In addition, it was confirmed that once discoloration occurred, the discoloration was accelerated and expanded over time mainly at the discolored portion. From this result, the discolored portion is expected to expand earlier in Control Sample compared with Sample 5, and this can significantly reduce the production yield in Control Sample. If the discolored portion is removed from Sample 5, the portion to be removed can be reduced to about half compared with Control Sample, and this can significantly increase the production yield compared with Control Sample.

Example 1-6

(1) Preparation of Sample 6 and Control Sample

Within 12 hours after landing, the tuna GG was cut and processed into loins, and the loins were placed in a plastic bag and stored in a refrigerator set at approximately 0°C to 2°C. After a lapse of about 24 hours from landing, the loin was removed from the plastic bag, and 200 g of blocks were prepared. The prepared blocks were divided into blocks for preparing Sample 6 and blocks for preparing Control Sample.

Sample 6 was obtained by packaging the block for preparing Sample 6 obtained as described above in the same manner as in Example 2 using the packaging member and the water-absorbing sheet of Type II. Sample 6 had an oxygen concentration in a gas inside the package of not more than 0.1 vol.% and an amount of oxygen from 0.2 mL to 1.5 mL per kg of the cut of raw tuna meat. In addition, Sample 6 was determined to have an amount of gas inside the package of not greater than 5 L per kg of the cut of raw tuna meat. The prepared Sample 6 was stored in a refrigerator at 5°C, which was a relatively high temperature setting, during the period until evaluation.

For the block for preparing Control Sample, the packaging member and the water-absorbing sheet of Type IV were used, and Control Sample was prepared. First, the entire block was wrapped with the cooking sheet and further wrapped with the water-resistant paper on the above, and this was contained in the plastic bag. Then, the plastic bag was filled with air instead of nitrogen gas, the mouth of the plastic bag was sealed using a rubber band, and Control Sample was obtained. The prepared Control Sample was placed in a storage box made of polystyrene foam and stored in a refrigerator at 5°C, which was a relatively high temperature setting, during the period until evaluation.

(2) Evaluation

For Sample 6 and Control Sample prepared as described above, one each of the packaged raw tuna meat was opened after a lapse of 4 days after landing (corresponding to after a lapse of 3 days after packaging), sashimi was prepared from the block of the cut of raw tuna meat removed from the package, and the hue of the sashimi was observed and evaluated.

As a result of comparing the hue of the surface and the surface layer from 3 mm to 5 mm, and the hue of the layer underneath between Sample 6 and Control Sample, it was observed that Sample 6 exhibited relatively bright hue in all the portions similarly as in other evaluation results. It was confirmed that Sample 6 had no significant change in hue after a lapse of 1 day from preparing the sashimi. It was found that the hue change was delayed in Sample 6. The above results confirmed that providing the period of refrigerated storage before packaging allows Sample 6 to tend to have good hue also in the storage at a relatively high temperature setting (e.g., 5°C) after packaging compared with Control Sample.

Example 1-7

(1) Preparation of Sample 7 and Control Sample

Within 72 hours after landing, the tuna GG was cut and processed into loins, and the loins were placed in a plastic bag and stored in a refrigerator set at 0°C. After a lapse of about 96 hours (4 days) from landing, the loin was removed from the plastic bag, and from 100 g to 200 g of blocks were prepared. The prepared blocks were divided into blocks for preparing Sample 7 and blocks for preparing Control Sample.

Sample 7 was obtained by packaging the block for preparing Sample 7 obtained as described above in the same manner as in Test 1 of Example 1 using the packaging members and the water-absorbing sheet of Type I. Sample 7 had an oxygen concentration in a gas inside the package of not greater than 0.1 vol.% and an amount of oxygen from 0.2 mL to 1.5 mL per kg of the cut of raw tuna meat. In addition, Sample 7 was determined to have an amount of gas inside the package of not greater than 5 L per kg of the cut of raw tuna meat. The prepared Sample 7 was stored in a refrigerator kept at approximately 0°C to 2°C.

For the block for preparing Control Sample, the packaging member and the water-absorbing sheet of Type IV were used, and Control Sample was prepared. First, the entire block was wrapped with the cooking sheet and further wrapped with the water-resistant paper from the above, and this was contained in the plastic bag. Then, the plastic bag was filled with air instead of nitrogen gas, the mouth of the plastic bag was sealed using a rubber band, and Control Sample was obtained. The prepared Control Sample was placed in a storage box made of polystyrene foam and stored in a refrigerator kept at approximately 0°C to 2°C until evaluation.

(2) Evaluation

For Sample 7 and Control Sample prepared as described above, one packaged raw tuna meat from each Sample was opened after a lapse of 25 days after landing (corresponding to after a lapse of 21 days after packaging), sashimi was prepared from the block of the cut of raw tuna meat removed from the package, and the hue of the sashimi was observed and evaluated.

As a result, in Sample 7, the sashimi had been irreversibly discolored only on the surface and approximately 1 mm of the surface layer, but no discoloration was observed at all in the inside. In contrast, in Control Sample, as a result of the discoloration of the sashimi reaching inside, the color of the body had been divided into three layers, and only the central portion had not been discolored. In addition, when each sashimi was stored in a refrigerator kept at 0°C to 2°C to observe the change over time, Sample 7 reserved a good hue also after a lapse of 48 hours from opening the package, confirming that Sample 7 can reserve the quality until after a lapse of 27 days from landing.

An overview of Example 1-1 to Example 1-7 is summarized in Table 2 below.

Table 2

| | | Cutting process | | Packaging process | | | | | | Evaluation results (days after landing) |
|---|---|---|---|---|---|---|---|---|---|---|
| | | Cutting timing | Storage temperature after cutting | Packaging timing (after cutting) | Package type | Sealing method | Storage temperature after packaging | Atmosphere | Filling/ degassing | |
| Example 1-1 | Sample 1 | < 24 hrs | - | Immediately after cutting | I | Fastener sealing | 0 to 2°C | $N_2$ | Filling | Days 5 and 8: no discolored portion Day 11: 1 mm of discolored portion in surface layer |
| | Control Sample | | | | IV | Rubber band | | Air | Filling | Day 5: 5 mm of discolored portion Day 8: 15 mm of discolored portion |
| Example 1-2 | Sample 2 | < 24 hrs | - | Immediately after cutting | II | Rubber band | 0 to 2°C | $N_2$ | Filling | Day 4: not discolored Day 6: not discolored |
| | Control Sample | | | | IV | | | Air | Filling | Day 4: surface discolored Day 6: discoloration in portion of 5 to 10 mm of surface layer |
| Example 1-3 | Sample 3-1 | < 24 hrs | - | Immediately after cutting | III | Heat sealing | 0 to 2°C | $N_2$ (Degassing) | Degassing | Day 5: brighter red after 6 hrs and 72 hrs |
| | Sample 3-2 | | | | III | | | Degassing | - | Day 5: good hue immediately after unpacking but discolored 1 hr after unpacking |
| | Control Sample | | | | IV | Rubber band | | Air | Degassing | Day 5: surface layer already discolored upon opening |
| Example 1-4 | Sample 4-1 | < 12 hrs | - | Immediately after cutting | II | Heat sealing | 0 to 2°C | $N_2$ (Degassing) | Filling | Day 5: no discolored portion |
| | Sample 4-2 | | | | II | Rubber band | | He (Degassing) | Filling | Day 5: no discolored portion |
| | Sample 4-3 | | | | II | Heat sealing | | Degassing | - | Day 5: approximately 5 mm from surface discolored |
| | Control Sample | | | | IV | Rubber band | | Degassing | Filling | Day 5: 5 to 8 mm from surface discolored |

| | | Cutting process | | Packaging process | | | | | | Evaluation results (days after landing) |
|---|---|---|---|---|---|---|---|---|---|---|
| | | Cutting timing | Storage temperature after cutting | Packaging timing (after cutting) | Package type | Sealing method | Storage temperature after packaging | Atmosphere | Filling/ degassing | |
| Example 1-5 | Sample 5 | < 24 hrs | 0°C | After 24 hrs (48 hr after landing) | II | Rubber band | 0 to 2°C | $N_2$ | Filling | Day 5: 2 layers, 7 to 8 mm of surface layer in light pink Day 8: 2 layers, 7 to 8 mm of surface layer in light pink |
| | Control Sample | | | | IV | | | Air | Filling | Day 5: 2 layers, 5 to 10 mm of surface layer in light pink Day 8: 3 layers, 7 to 8 mm of surface layer in light pink/3 to 10 mm beneath in light green/ central portion: not discolored |
| Example 1-6 | Sample 6 | < 12 hrs | 0 to 2°C | After 12 hrs (48 hrs after landing) | II | Rubber band | 5°C | $N_2$ | Filling | Day 4: 3 to 5 mm of surface layer discolored/beneath in bright red |
| | Control Sample | | | | IV | | | Air | Filling | Day 4: 3 to 5 mm of surface layer discolored, beneath in red |
| Example 1-7 | Sample 7 | < 72 hrs | 0 to 2°C | After 24 hrs (96 hr after landing) | I | Fastener sealing | 0 to 2°C | $N_2$ | Filling | Day 25: only 1 mm of surface layer discolored, good hue maintained after 48 hrs |
| | Control Sample | | | | IV | Rubber band | | Air | Filling | Day 25: 3 layers, surface discolored/intermediate layer discolored/central portion not discolored |

In addition, Sample 1 to Sample 7 showed a tendency to reduce an amount of drip produced from the cut of raw tuna meat removed from the packaged product opened compared with the Control Sample.

As thus shown in the above examples, the present disclosure can provide the packaged raw tuna meat including a cut of raw tuna meat of which discoloration is prevented and hue change is delayed during the period in the package and in some instances also after unpacking the package. In addition, the hue of the cut of raw tuna meat can be well preserved during the period in the package and in some instances also after unpacking the package. Furthermore, in preparing a product, such as sashimi, from the packaged product, the discolored portion that needs to be cut off can be reduced, and the production yield as a product can be improved over that of related products known in the art. Thus, the present disclosure can provide a packaged raw tuna meat prevented from discoloring and a method for preventing discoloration of a cut of raw tuna meat.

SECOND ASPECT

Example 2-1

Three aquacultured Pacific bluefin tunas were freshly killed immediately after landing, gills and guts were removed, and the resulting tuna GGs were placed in ice water. The resulting GGs each weighed 68.4 kg, 74.8 kg, and 82.0 kg with body mass index of 20.3, 22.6, and 23.3, respectively.

The GGs were cut after a lapse of 24 hours to 28 hours from processing the aquacultured tunas into GGs. The cutting was carried out in a cutting chamber at room temperature of 18°C to 20°C. The head and tail portions were cut off from the tuna GG, then the dorsal side and then the ventral side were cut with a kitchen knife according to a common procedure to cut the fish meat, and a dorsal loin weighing 9 kg was obtained. Furthermore, the dorsal loin was divided into 5 blocks weighing from 1 kg to 2 kg (designated as A, B, C, D, and E from the head side), and among them blocks A to D corresponding to dorsal medium fatty meat were used for testing. The blocks were each further processed into sakus of 20 cm x 8 cm x 2.5 cm for test samples.

For packaging, a plastic film pouch (available from Kureha Corporation, trade designation: "Krehalon ML40G") having an oxygen permeability of 20 $cm^3/m^2 \cdot 24$ hr•atm at a temperature of 23°C and a humidity of 80% RH was used. Each sample was placed in the film pouch and vacuum-packed using a chamber vacuum packaging machine (trade designation: C-200, MULTIVAC) to make not more than 10 mbar, and sealed by thermocompression bonding. Then the package was packed together with ice in a polystyrene foam box and stored for one day, and then stored in a refrigerator set at 5°C from the second day.

Krehalon ML40G used had the following properties.
Resin configuration: PET/PA/EVOH/PO (PET: polyethylene terephthalate, PA: polyamide,
EVOH: ethylene-vinyl alcohol copolymer, PO: polyolefin)
Total thickness: 40 $\mu$m
Tensile strength (JIS K 7127 (23°C-50% RH): 130 MPa/160MPa (longitudinal/lateral)
Elongation at break (JIS K 7127 (23°C-50% RH): 160%/130% (longitudinal/lateral)
Tensile elastic modulus (JIS K 7127 (23°C-50% RH): 650 MPa/700 MPa
(longitudinal/lateral)

The amount of gas inside the package after packaging was measured to be not more than 5 mL. This packaged product is hereinafter also referred to as the "vacuum product".

As a comparative control, another packaged product (hereinafter referred to as the "regular product") was used, the packaged product obtained in the same manner as the vacuum product with the exception that each sample was wrapped in a water-supply sheet, packaged with "CANS FILM (trade name) Barrier 7" (trade designation, available from Shikoku Kakoh Co., Ltd.), and sealed.

Hue evaluation

After a lapse of 3 days from packaging (corresponding to after a lapse of 4 days from landing), the regular product and the vacuum product of sakus prepared from the left and right of the same part in the same individual were opened simultaneously. Each of two slices with 10 mm-thick sashimi cut in the vertical direction to each vertebrae of the regular product and the vacuum product were contained in a tightly closing container, arranged with the cut surface of the sashimi facing upward, and stored at 4°C. Two slices of sashimi were measured for hues each at one point in the central part at 0 hours (immediately after storage), after a lapse of 0.5 hours, after a lapse of 2 hours, after a lapse of 4 hours, and after a lapse of 8 hours from storage using a chroma meter (trade designation: CR-400, available from Konica Minolta Japan Inc.). The regular product and the vacuum product after a lapse of 7 days from packaging (corresponding to after a lapse of 8 days from landing), the products stored unopened at 4°C, were also evaluated in the same manner.

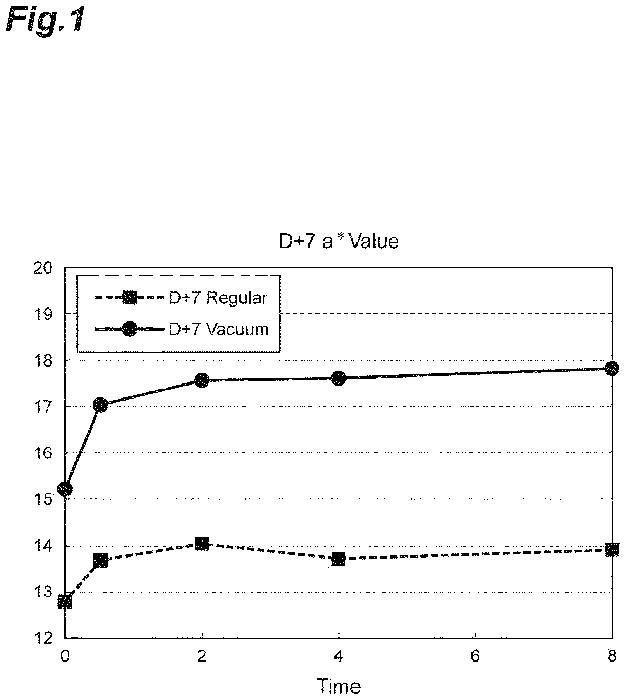

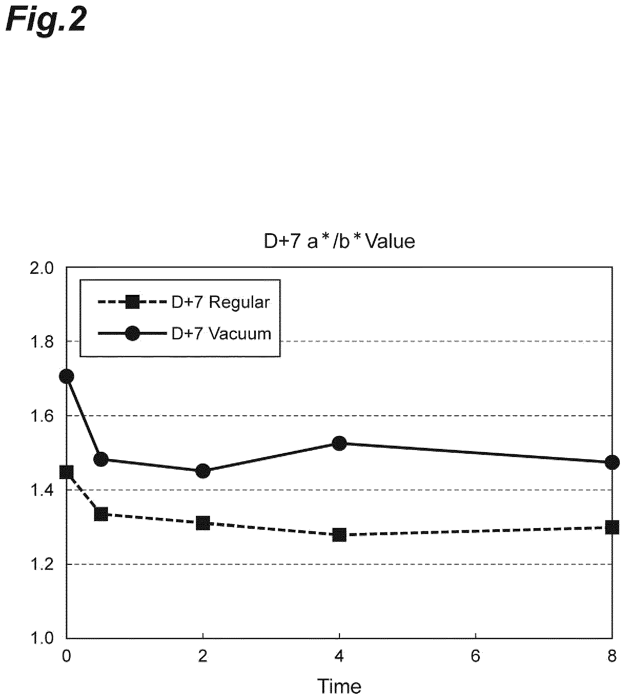

The results are shown in Table 3, Table 4, FIG. 1, and FIG. 2. In Table 3, Table 4, FIG. 1, and FIG. 2, "D+3" and "D+7" mean the sample after a lapse of 3 days and the sample after a lapse of 7 days from storage, respectively. In Table 3, Table 4, FIG. 1, and FIG. 2, "Regular" means the regular product, and "vacuum" means the vacuum product.

Table 3

|  | a* value | | | | |
|---|---|---|---|---|---|
|  | Immediately after | After 0.5 hr | After 2 hrs | After 4 hrs | After 8 hrs |
| D+3 Regular | 15.06 | 16.07 | 17.28 | 17.09 | 17.03 |
| D+3 Vacuum | 14.60 | 16.40 | 17.01 | 17.44 | 17.38 |
| D+7 Regular | 12.76 | 13.68 | 14.04 | 13.69 | 13.92 |
| D+7 Vacuum | 15.21 | 17.04 | 17.54 | 17.62 | 17.84 |

Table 4

|  | a*/b* value | | | | |
|---|---|---|---|---|---|
|  | Immediately after | After 0.5 hr | After 2 hrs | After 4 hrs | After 8 hrs |
| D+3 Regular | 1.81 | 1.51 | 1.49 | 1.43 | 1.44 |
| D+3 Vacuum | 1.96 | 1.50 | 1.45 | 1.47 | 1.44 |
| D+7 Regular | 1.45 | 1.33 | 1.31 | 1.28 | 1.30 |
| D+7 Vacuum | 1.70 | 1.48 | 1.45 | 1.52 | 1.48 |

As shown in Table 3, Table 4, FIG. 1, and FIG. 2, in the samples of both the regular product and the vacuum product after a lapse of 3 days from packaging, from immediately after unpacking the package to after a lapse of 0.5 hours, the a* value increased, and on the other hand, the a*/b* value decreased, but thereafter relatively constant values were maintained. This result means that dark red of high freshness changed to scarlet, and the state was well maintained. The samples of both the regular product and the vacuum product after a lapse of 7 days from packaging also showed similar trends for the a* value and the a*/b* value to those of the samples after a lapse of 3 days from packaging, although the values immediately after unpacking the package were each different.

On the other hand, a comparison between the sample after a lapse of 3 days from packaging and the sample after a lapse of 7 days after packaging revealed that for the regular product, the sample after a lapse of 7 days had larger decreases than the sample after a lapse of 3 days in both the a* value and the a*/b* value. This means that the reddish hue became dull, and the yellowish hue was slightly intensified over time after packaging, which means that the hue shifted to dark brown. In particular, the a* value immediately after unpacking the package was greatly lower in the sample after a lapse of 7 days from packaging than in the sample after a lapse of 3 days from packaging. This means that in the regular product, the hue of the cut of raw tuna meat changed also in the packaged state.

In contrast, in the vacuum product, decreases in both the a* value and the a*/b* value immediately after unpacking the package were small in comparison between the sample after a lapse of 3 days from packaging and the sample after a lapse of 7 days from packaging, and in particular, almost no decrease can be seen in the a* value of the sample after a lapse of 7 days from packaging. Furthermore, the vacuum product maintained relatively high values for both the a* value and the a*/b* value also after unpacking the package, and each value did not decrease to the same degree as the regular product. These results mean that the vacuum product can delay the change in the hue not only in the packaged state but also after unpacking the package.

Drip evaluation

After a lapse of 3 days from packaging (corresponding to after a lapse of 4 days from landing), the regular product and the vacuum product of sakus prepared from the left and right of the same part in the same individual were opened simultaneously. Two slices each of 10 mm-thick sashimi cut in the vertical direction to each vertebrae of the regular product and the vacuum product were prepared and placed on a container weighed in advance, and the total weight was measured. The weight of the container was subtracted from the resulting measured value to calculate the amount of the sashimi before storage. Then, two slices of sashimi were contained in a container, arranged with the cut surface of the sashimi facing upward, and the container was tightly closed and stored at 4°C. After a lapse of 6 hours from storage, each sashimi was removed from the container, and the weight of the sum of the container and the drip remaining in the container were measured. The weight of the container was subtracted from the resulting measured value to calculate the amount of drip and evaluate the amount of drip from the two slices of sashimi. The amount of drip was calculated by the following equation. The same measurements were carried out using sakus obtained from three aquacultured Pacific bluefin tunas as samples. The results are shown in Table 5. Amount of drip (%) = (weight of drip)/(weight of sashimi before storage) x 100

Table 5

|  | Amount of drip (%) | | | |
|---|---|---|---|---|
|  | Individual 1 | Individual 2 | Individual 3 | Average |
| D+3 Regular | 0.7 | 1.1 | 1.2 | 1.0 |
| D+3 Vacuum | 0.5 | 0.7 | 1.0 | 0.6 |

As shown in Table 5, it was observed that the amount of drip was reduced in the vacuum product compared with the regular product. This means that the vacuum product can delay the change in quality of the cut of raw tuna meat not only in the packaged state but also after unpacking the package compared with the regular product.

In addition, for the vacuum product, the cut of raw tuna meat removed from the packaged product opened tended to be tender and easy to cut in processing compared with the regular product. The vacuum product also tended to have less odor transfer, which is relatively common in aquacultured fish, compared with the regular product.

These results have revealed that the present disclosure can provide a packaged raw tuna meat in which the change in the hue is delayed during the period in the package and also after unpacking the package, and a method for preventing discoloration of a cut of raw tuna meat.

**Claims**

1. Packaged raw tuna meat comprising:

   an oxygen-impermeable packaging member; and
   a cut of raw tuna meat packaged with the packaging member together with a gas having an oxygen concentration of not greater than 1 vol.%.

2. The packaged raw tuna meat according to claim 1, wherein the gas comprises an inert gas.

3. The packaged raw tuna meat according to claim 2, wherein the inert gas comprises at least one gas selected from the group consisting of nitrogen gas, carbon dioxide gas, helium gas, and argon gas.

4. The packaged raw tuna meat according to any one of claims 1 to 3, further comprising a water-absorbing member, wherein a portion or a whole of the cut of raw tuna meat is in contact with the water-absorbing member.

5. The packaged raw tuna meat according to any one of claims 1 to 4, wherein oxygen permeability of the packaging member is not greater than 1000 $cm^3/m^2 \cdot 24$ hr$\cdot$atm.

6. The packaged raw tuna meat according to any one of claims 1 to 5, wherein oxygen permeability of the packaging member is not greater than 50 $cm^3/m^2 \cdot 24$ hr$\cdot$atm.

7. A method for producing packaged raw tuna meat, the method comprising:

   cutting a tuna after landing to obtain a cut of raw tuna meat;
   packaging the cut of raw tuna meat with an oxygen-impermeable packaging member, and carrying out gas displacement until an oxygen concentration in a gas inside the package becomes not greater than 1 vol.%; and
   sealing the packaging member after the gas displacement.

8. The method for producing a packaged raw tuna meat according to claim 7, wherein the gas displacement is carried out using an inert gas.

9. The method for producing a packaged raw tuna meat according to claim 8, wherein the inert gas comprises at least one gas selected from the group consisting of nitrogen gas, carbon dioxide gas, helium gas, and argon gas.

10. The method for producing a packaged raw tuna meat according to any one of claims 7 to 9, the method further comprising storing the cut of raw tuna meat under refrigeration until the cut of raw tuna meat is packaged with the packaging member.

11. A method for preventing discoloration of a cut of raw tuna meat, the method comprising:

cutting a tuna after landing to obtain a cut of raw tuna meat;
packaging the cut of raw tuna meat with an oxygen-impermeable packaging member, and carrying out gas displacement until an oxygen concentration in a gas inside the package becomes not greater than 1 vol.%; and
sealing the packaging member after the gas displacement to obtain a packaged raw tuna meat.

12. The method for preventing discoloration of a cut of raw tuna meat according to claim 11, the method further comprising storing the packaged raw tuna meat under refrigeration.

13. The method for preventing discoloration of a cut of raw tuna meat according to claim 12, wherein duration of the refrigerated storage is at least one week.

14. The method for preventing discoloration of a cut of raw tuna meat according to claim 12, wherein duration of the refrigerated storage is at least four weeks.

15. Packaged raw tuna meat comprising:

an oxygen-impermeable packaging member; and
a cut of raw tuna meat tightly packaged with the packaging member,

wherein an amount of gas inside the package is not greater than 21 mL per kg of the cut of raw tuna meat.

16. The packaged raw tuna meat according to claim 15, wherein an oxygen permeability of the packaging member is not greater than 1000 $cm^3/m^2 \cdot 24$ hr$\cdot$atm.

17. The packaged raw tuna meat according to claim 15 or 16, wherein oxygen permeability of the packaging member is not greater than 200 $cm^3/m^2 \cdot 24$ hr$\cdot$atm.

18. The packaged raw tuna meat according to any one of claims 15 to 17, wherein a tensile strength of the packaging member is from 80 MPa to 250 MPa.

19. The packaged raw tuna meat according to any one of claims 15 to 18, wherein a tensile elastic modulus of the packaging member is from 500 MPa to 900 MPa.

20. A method for producing packaged raw tuna meat, the method comprising:

cutting a tuna after landing to obtain a cut of raw tuna meat; and
tightly packaging the cut of raw tuna meat with an oxygen-impermeable packaging member, making an amount of gas inside the package not more than 21 mL per kg of the cut of raw tuna meat.

21. The method for producing a packaged raw tuna meat according to claim 20, further comprising storing the cut of raw tuna meat after cutting under refrigeration until the cut of raw tuna meat is packaged with the packaging member.

22. A method for preventing discoloration of a cut of raw tuna meat, the method comprising:

cutting a tuna after landing to obtain a cut of raw tuna meat; and
tightly packaging the cut of raw tuna meat with an oxygen-impermeable packaging member, making an amount of gas inside the package not greater than 21 mL per kg of the cut of raw tuna meat to obtain a packaged raw tuna meat.

23. The method for preventing discoloration of a cut of raw tuna meat according to claim 22, further comprising storing the packaged raw tuna meat under refrigeration.

24. The method for preventing discoloration of a cut of raw tuna meat according to claim 23, wherein duration of the refrigerated storage is at least four days.

25. A cut of raw tuna meat to be removed from a packaged raw tuna meat after a lapse of not less than four days from packaging, wherein
an a* value measured with a chroma meter is not less than 14.05 and not greater than 19 after a lapse of 0.5 hours from opening the packaged raw tuna meat.

26. A cut of raw tuna meat to be removed from a packaged raw tuna meat, wherein
an a*/b* value measured with a chroma meter is not less than 99% relative to an a*/b* value after a lapse of 0.5 hours from opening the packaged raw tuna meat.

27. A cut of raw tuna meat to be removed from a packaged raw tuna meat after a lapse of not less than four days from packaging, wherein
an a*/b* value measured with a chroma meter is not less than 1.29 after a lapse of 0.5 hours from opening the packaged raw tuna meat.

28. A method for providing a cut of raw tuna meat, the method comprising a step of opening packaged raw tuna meat, wherein
an a* value of the cut of raw tuna meat measured with a chroma meter is not less than 17.05 after a lapse of 8 hours from after opening the packaged raw tuna meat.

# *Fig.1*

D+7 a*Value

# *Fig.2*

D+7 a*/b*Value

# INTERNATIONAL SEARCH REPORT

International application No.

PCT/JP2018/035201

| | |
|---|---|
| **A. CLASSIFICATION OF SUBJECT MATTER**<br>Int. Cl. A23L17/00(2016.01)i, A23B4/00(2006.01)i<br><br>According to International Patent Classification (IPC) or to both national classification and IPC | |

**B. FIELDS SEARCHED**

Minimum documentation searched (classification system followed by classification symbols)
Int. Cl. A23L17/00, A23B4/00

Documentation searched other than minimum documentation to the extent that such documents are included in the fields searched
Published examined utility model applications of Japan     1922-1996
Published unexamined utility model applications of Japan   1971-2018
Registered utility model specifications of Japan           1996-2018
Published registered utility model applications of Japan   1994-2018

Electronic data base consulted during the international search (name of data base and, where practicable, search terms used)
JSTPlus/JMEDPlus/JST7580 (JDreamIII), CAplus/FSTA/AGRICOLA (STN)

**C. DOCUMENTS CONSIDERED TO BE RELEVANT**

| Category* | Citation of document, with indication, where appropriate, of the relevant passages | Relevant to claim No. |
|---|---|---|
| X, Y | 田中幹雄, マグロ切り身のガス置換包装による品質保持, 日本水産学会誌, 1996, vol. 62, no. 5, pp. 800-805, Method, Results and Discussion (TANAKA, Mikio et al. Gas-exchanged Packaging of Tuna Filets. Nippon Suisan Gakkaishi.) | 1-3, 5-13, 15-28/1-28 |
| Y | JP 2015-504687 A (GLOBAL FRESH FOODS) 16 February 2015, claims, paragraph [0017] & US 2013/0189409 A1, claims & WO 2013/112203 A1 & EP 2836085 A | 1-28 |
| Y | JP 2-4622 A (TAKASHIMA, Tomoki) 09 January 1990, claims, page 4 (Family: none) | 1-28 |

☒ Further documents are listed in the continuation of Box C.   ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>13.12.2018 | Date of mailing of the international search report<br>25.12.2018 |
|---|---|
| Name and mailing address of the ISA/<br>  Japan Patent Office<br>  3-4-3, Kasumigaseki, Chiyoda-ku,<br>  Tokyo 100-8915, Japan | Authorized officer<br><br>Telephone No. |

Form PCT/ISA/210 (second sheet) (January 2015)

**INTERNATIONAL SEARCH REPORT**

International application No.

PCT/JP2018/035201

C (Continuation).    DOCUMENTS CONSIDERED TO BE RELEVANT

| Category* | Citation of document, with indication, where appropriate, of the relevant passages | Relevant to claim No. |
|---|---|---|
| A | MUELA, E. et al., Effect of gas packaging conditions on thawed Thunnus obelus preservation, Food control, 2014, vol. 46, pp. 217-224, abstract | 1-28 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8070764 A
- JP 2015015946 A

- JP 2006014630 A